# FASCICULE DE BREVET EUROPEEN

(11) **EP 3 939 232 B1**
(45) Date de publication et mention de la délivrance du brevet: **23.04.2025**
(21) Numéro de dépôt: 20725855.9
(22) Date de dépôt: 09.03.2020
(51) Int. Cl.: H04L 9/40

(54) **MITIGATION D'ATTAQUES INFORMATIQUES**
VERMINDERUNG VON RECHNERANGRIFFEN
MITIGATING COMPUTER ATTACKS

(30) Priorité: 14.03.2019 FR 1902620
(43) Date de publication de la demande: 19.01.2022
(60) Demande divisionnaire: 25157833.2
(73) Titulaire: Orange, 92130 Issy-les-Moulineaux (FR)
(72) Inventeur: BOUCADAIR, Mohamed, 92326 CHÂTILLON CEDEX (FR); JACQUENET, Christian, 92326 CHÂTILLON CEDEX (FR)
(74) Mandataire: Plasseraud IP
(86) Numéro de dépôt international: PCT/FR2020/050474
(87) Numéro de publication internationale: WO 2020/183100

(56) Documents cités:
- US-A1- 2017 359 360
- US-A1- 2018 007 518
- LI XU ET AL: "Drone-assisted public safety wireless broadband network", 2015 IEEE WIRELESS COMMUNICATIONS AND NETWORKING CONFERENCE WORKSHOPS (WCNCW), IEEE, 9 March 2015 (2015-03-09), pages 323 - 328, XP032786296, DOI: 10.1109/WCNCW.2015.7122575

## Description

L'invention relève du domaine des télécommunications, et concerne en particulier la mise en place de mécanismes fiables et robustes de protection de ressources (réseau, terminaux connectés à un réseau, serveurs connectés à un réseau), pour répondre à des attaques informatiques comme par exemple de type « déni de service » (ou « DDoS », pour « Distributed Denial of Service »).

Une attaque DDoS est une tentative de rendre des ressources (par exemple des ressources réseau ou de calcul) indisponibles pour leurs utilisateurs. Dans la plupart des cas, de telles attaques peuvent être massivement déployées en compromettant plusieurs centaines de milliers de terminaux et en utilisant ces hôtes infectés pour amplifier leur pouvoir de nuisance.

Lorsqu'autant de machines sont impliquées dans l'exécution des attaques, la mise en place de politiques de filtrage adaptées, c'est-à-dire capables d'isoler le trafic en provenance de l'ensemble des machines infectées est d'autant plus compliquée que ces machines peuvent être massivement distribuées sur plusieurs réseaux distincts. Par ailleurs, la durée de telles attaques (une heure ou plus) ainsi que leur propagation compliquent encore un peu plus la tâche de services dits « DPS » (pour « DDoS Protection Services ») susceptibles d'être mobilisés pour la résolution de ces attaques.

De plus en plus d'offres DPS sont hébergées dans le « cloud » et pas seulement au sein des infrastructures exploitées par les fournisseurs d'accès. Ces déploiements soulèvent des problèmes tels que la détection anticipée des attaques car le service DPS n'est pas forcément présent sur les chemins de routage des données pour joindre un réseau victime d'une attaque.

Des palliatifs peuvent être considérés tels que l'établissement de « tunnels » pour forcer l'intégralité du trafic d'un site ou d'un réseau à être inspecté par le service DPS. Cependant, cette réalisation reposant sur l'établissement de tunnels augmente considérablement la latence observée par les utilisateurs et impose des contraintes de dimensionnement du service DPS pour être en mesure de traiter tout le trafic sans pour autant dégrader la performance ou le niveau de qualité d'expérience telle que perçue par le client. En outre, de tels tunnels sont des vecteurs d'attaque privilégiés.

Même si le service DPS est présent sur le chemin du trafic entrant dans un réseau (cas des fournisseurs d'accès offrant le service DPS), des complications supplémentaires sont rencontrées pour l'identification du trafic suspect. En effet, avec l'augmentation du trafic chiffré, notamment transporté sur UDP (« User Datagram Protocol »), il est difficile de distinguer le trafic légitime (c'est-à-dire, celui reçu avec le consentement d'un utilisateur) du trafic suspect. La difficulté d'accéder en clair aux messages de contrôle similaires à ceux de TCP (pour « Transmission Control Protocol » - typiquement l'échange des messages de type SYN/SYN-ACK/ACK) complique sensiblement la vérification du consentement d'une machine à recevoir du trafic.

Une architecture client/serveur spécifiée par l'IETF (« Internet Engineering Task Force ») a pour objectif de fournir un mécanisme permettant de signaler la détection de trafic suspect, voire d'attaque avérée, de sorte que les mesures de mitigation appropriées puissent être mises en œuvre le plus rapidement possible. Cette architecture est appelée « DOTS » (pour « DDoS Open Threat Signaling »). Elle est conçue pour permettre à un client DOTS d'informer un serveur DOTS qu'il a détecté un trafic suspect potentiellement caractéristique d'une attaque DDoS en cours, et que des actions de mitigation appropriées sont requises. Par action de « mitigation », on entend tout type d'action destinée à réduire voire à supprimer l'impact de l'attaque détectée ou soupçonnée (ex. mise en place dynamique d'un puits de trafic, etc.).

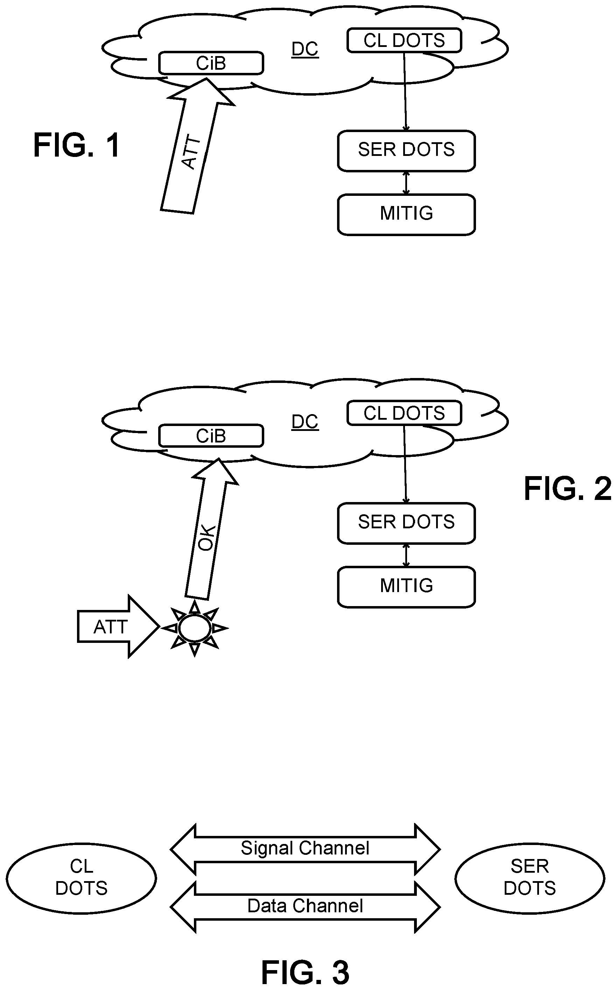

L'exemple de la figure 1 montre le cas d'une attaque ATT subie par un domaine client DC. Sur détection de l'attaque sur une cible CiB, le client DOTS (CL DOTS) du domaine envoie un message au serveur SER DOTS pour demander de l'aide pour une mitigation de l'attaque détectée (MITIG). Ce dernier coordonne les actions pour que le trafic associé à l'attaque de déni de service ne soit plus acheminé vers ce domaine, comme illustré sur la figure 2. Ainsi, seul le trafic « consenti » est acheminé.

En référence à la figure 3, la solution DOTS utilise deux canaux de communication :
- un canal de signalisation (« Signal Channel »), utilisé seulement pendant le temps que durent les attaques DDoS. Un client DOTS peut utiliser ce canal pour demander de l'aide auprès du serveur DOTS en l'informant qu'une attaque est en cours ;
- et un canal de données (« Data Channel »), utilisé si et seulement si aucune attaque DDoS n'est en cours. Par exemple, un client DOTS peut utiliser le canal de données pour installer des règles de filtrage, telles que le filtrage du trafic reçu de certaines adresses ou celui destiné à une machine donnée.

DOTS est une architecture destinée à faciliter la prise en charge de requêtes de mitigation d'attaques émises par un client et reçues par un serveur typiquement exploité par le fournisseur de service DPS. Toutefois, selon différents contextes (nature de l'attaque, localisation de la source à l'origine de l'attaque, amplitude, périmètre et portée de l'attaque, en particulier), le mécanisme DOTS peut se révéler insuffisant, voire inefficace. US2018/007518A1 divulgue l'usage d'une flotte de drones pour fournir un réseau maillé d'assistance pour de premiers appels ou communications depuis une zone sinistrée.

La présente invention vient améliorer la situation.

Elle propose à cet effet un procédé de gestion d'assistance à un réseau de communication susceptible d'acheminer un trafic caractéristique d'une attaque informatique, le procédé comportant:
- sur détection d'une attaque informatique, identifier au moins un premier nœud du réseau, nécessitant une intervention de mitigation, et identifier une politique de routage de trafic dans le réseau,
- piloter un déplacement d'au moins un objet mobile, et comportant au moins une interface de communication, pour connecter l'objet mobile à au moins un deuxième nœud du réseau déterminé relativement au premier nœud en fonction de ladite politique de routage de trafic,
- contrôler au moins une partie du trafic acheminé par le réseau pour rediriger ladite partie de trafic vers l'objet mobile via au moins ledit deuxième nœud dudit réseau.

Au sens de l'invention, un nœud nécessitant une intervention de mitigation est un nœud typiquement identifié dans un plan de mitigation comme étant la cible, la source ou la victime collatérale d'une attaque, ou encore un nœud impliqué dans la mise en place de ce plan de mitigation (par exemple, en exécutant une politique de redirection de trafic, en modifiant sa table de routage). On entend par « plan de mitigation », l'ensemble des actions et mesures mises en œuvre pour la mitigation d'une attaque.

Ainsi, l'invention propose un traitement des attaques reposant sur un principe de mobilité. Cette capacité à être mobile rend l'implémentation de l'invention particulièrement efficace dans le temps de traitement des requêtes de mitigation et dans l'exécution des actions de mitigation.

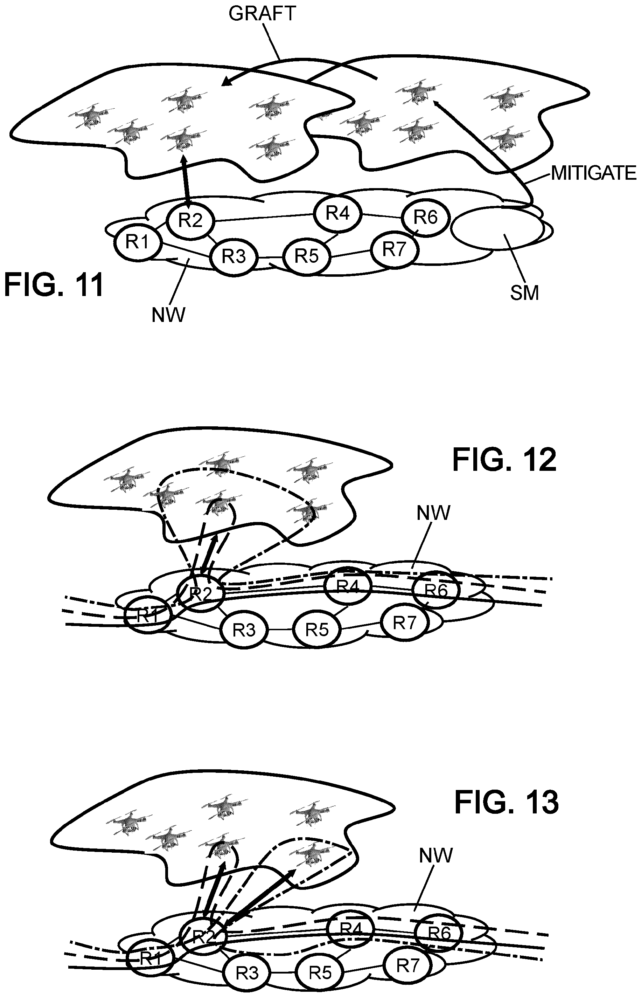

Dans un mode de réalisation, le deuxième nœud précité correspond au premier nœud. Il s'agit d'un mode détaillé ci-après en référence notamment à la figure 12, et dit « de boucle locale ».

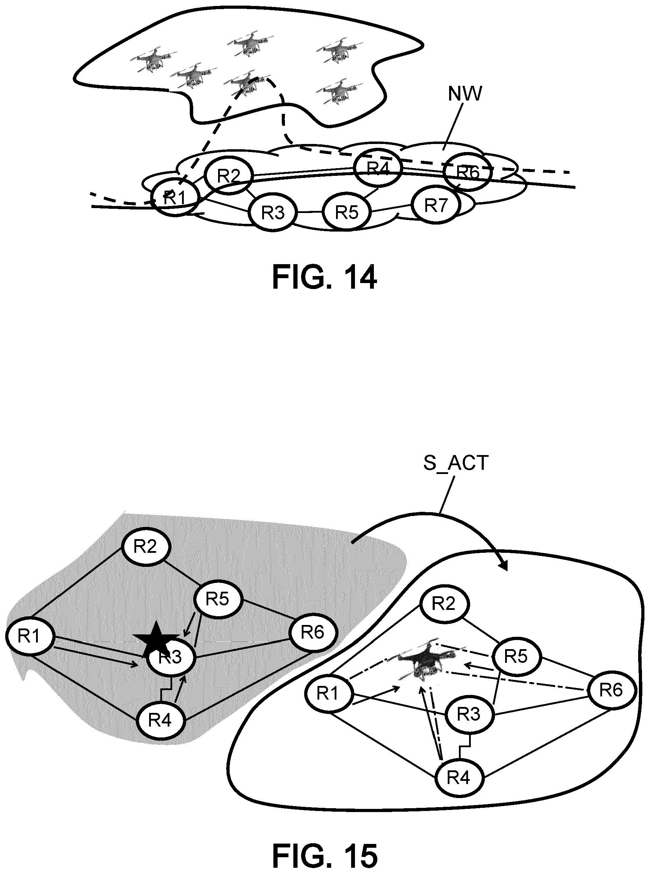

Alternativement, le deuxième nœud est distinct du premier nœud, ce qui peut correspondre à un mode « parallèle » ou de « bypass » détaillé plus loin en référence à la figure 14.

Dans une forme de réalisation, on prévoit une pluralité d'objets mobiles, comportant chacun au moins une interface de communication pour communiquer au moins entre objets mobiles, et un premier objet mobile, parmi ladite pluralité d'objets mobiles, est piloté pour se connecter au moins audit deuxième nœud du réseau.

Ces objets mobiles peuvent être par exemple des drones constituant une flotte de drones comme présenté dans les exemples de réalisation plus loin.

L'identification du premier nœud du réseau et de la politique de routage de trafic dans le réseau peut être réalisée par un serveur de mitigation en lien avec l'un au moins des objets mobiles (incluant le cas où le serveur de mitigation est embarqué dans l'un des objets mobiles).

L'attaque informatique peut être détectée par un deuxième objet mobile, relié au réseau, qui peut être (ou non) le même objet mobile que le premier objet mobile précité, connecté au deuxième nœud du réseau.

Alternativement, l'attaque informatique peut être détectée par un troisième nœud du réseau.

La détection peut s'effectuer par un nœud qui ne nécessite pas d'intervention et/ou qui n'est pas impliqué non plus dans le plan de mitigation.

En variante, ce troisième nœud peut correspondre au premier nœud précité.

De manière générale, le trafic précité, caractéristique de l'attaque informatique, peut être émis depuis au moins un nœud du réseau (ou non). Ce trafic caractéristique de l'attaque informatique peut aussi être destiné à au moins un nœud du réseau. En outre, il peut être local, en au moins un nœud du réseau (cas des virus, typiquement).

Dans une forme de réalisation, l'objet mobile peut être équipé d'un circuit de traitement comportant des ressources informatiques fournissant des capacités informatiques pour traiter au moins ladite partie de trafic redirigée vers l'objet mobile.

L'intervention nécessitée peut être une mitigation de trafic en réponse à une attaque par déni de service par exemple (DDoS).

Dans une forme de réalisation, l'objet mobile est configuré pour analyser et filtrer au moins ladite partie de trafic redirigée vers l'objet mobile (notion de nettoyage du trafic ou « scrubbing » en anglais).

L'objet mobile peut être configuré pour établir une communication par liaison radiofréquence pour se connecter à au moins ledit deuxième nœud, le déplacement de l'objet mobile étant pilotable à distance pour s'approcher d'une position géographique du deuxième nœud.

Une telle réalisation notamment permet de favoriser l'émergence de réseaux protecteurs, capables de détecter et d'anticiper des attaques avant même qu'elles n'atteignent leurs cibles.

Une telle mise en œuvre permet avantageusement :
- d'activer à la demande une fonction de filtrage du trafic suspect afin de « nettoyer » le réseau de toute trace de ce trafic (« scrubbing ») au plus proche de la source (cible) de l'attaque ;
- de réduire la charge des équipements impliqués dans la propagation du trafic d'attaque, de sorte que le trafic légitime puisse continuer d'être acheminé dans les meilleures conditions malgré la présence du trafic d'attaque et indépendamment de sa volumétrie ;
- de mettre en place de façon dynamique et automatisée les mesures de protection pour toute localisation des ressources mobilisées dans la mitigation de l'attaque tout en préservant la continuité et la qualité des services souscrits par les utilisateurs ;
- d'offrir un service DPS « portable » et mobile pour une mitigation plus efficace ;
- d'exploiter les ressources d'un service DPS mobile, portable, capable de détecter et d'intervenir à n'importe quel moment et à n'importe quel endroit (du réseau) où une attaque a été détectée ;
- d'assurer la continuité des services offerts par le réseau protégé.

Dans un exemple de réalisation, le procédé peut comprendre:
- une émission d'un message de greffe à destination de l'objet mobile, pour commander un déplacement de l'objet mobile et établir une connexion de l'objet mobile au deuxième nœud, désigné dans le message de greffe,
- une émission d'un message de politique de routage à destination de l'objet mobile, pour commander au moins une règle de routage de trafic par l'objet mobile,
- une émission d'un (deuxième) message de politique de routage à destination au moins du deuxième nœud cette fois, pour commander au moins une règle de routage de trafic par le deuxième nœud.

Le procédé peut comporter en en outre :
- sur réception d'une requête de fin d'assistance pour le traitement de l'attaque informatique, piloter l'objet pour analyser au moins ladite partie de trafic, et, en fonction de l'analyse :
   * confirmer une fin d'assistance, ou
   * décider une temporisation avant la fin d'assistance.

En cas de confirmation de fin d'assistance, on peut prévoir l'émission d'un message de cessation d'intervention à destination de l'objet mobile.

On peut prévoir en outre des règles de routage comportant une instruction de reprise progressive de trafic normal par le premier nœud nécessitant l'intervention, avant la fin de l'assistance.

L'émission de ces divers messages peut être effectuée par au moins un serveur de mitigation en lien avec l'objet mobile.

La présente invention vise aussi un programme informatique comportant des instructions pour la mise en œuvre du procédé ci-avant, lorsque lesdites instructions sont exécutées par un processeur d'un circuit de traitement.

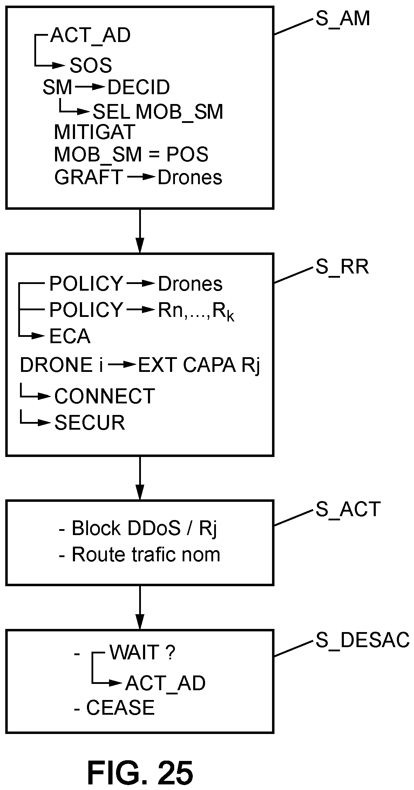

Ce circuit de traitement peut être implanté typiquement dans un serveur de mitigation du type présenté ci-dessus. Le circuit de traitement peut comporter typiquement une interface de communication avec par exemple au moins un nœud du réseau et au moins un objet mobile, ainsi qu'une mémoire stockant des instructions du programme informatique, et un processeur pour les exécuter. Ce programme informatique peut mettre en œuvre un algorithme général tel que celui illustré sur la figure 25 à titre d'exemple.

La présente invention vise aussi un système de gestion d'assistance à un réseau de communication susceptible d'acheminer un trafic caractéristique d'une attaque informatique, comportant au moins:
- un objet, mobile, et comportant au moins une interface de communication, pour se connecter au moins à un nœud du réseau,
- un serveur de mitigation configuré pour, en réponse à une détection d'attaque informatique :
   * identifier au moins un premier nœud du réseau, nécessitant une intervention de mitigation,
   * identifier une politique de routage de trafic dans le réseau,
   * piloter un déplacement de l'objet mobile pour connecter l'objet mobile à au moins un deuxième nœud du réseau, déterminé relativement au premier nœud en fonction de ladite politique de routage de trafic,
   * contrôler au moins une partie du trafic acheminé par le réseau pour rediriger ladite partie de trafic vers l'objet mobile via au moins ledit deuxième nœud dudit réseau.

La présente invention vise aussi un serveur de mitigation pour une assistance à un réseau de communication susceptible d'acheminer un trafic caractéristique d'une attaque informatique. En particulier, le serveur de mitigation étant configuré pour, en réponse à une détection d'attaque informatique :
* identifier au moins un premier nœud du réseau, nécessitant une intervention de mitigation,
* identifier une politique de routage de trafic dans le réseau,
* piloter un déplacement d'au moins un objet mobile comportant au moins une interface de communication, pour connecter ledit objet mobile à au moins un deuxième nœud du réseau, déterminé relativement au premier nœud en fonction de ladite politique de routage de trafic,
* contrôler au moins une partie du trafic acheminé par le réseau pour rediriger ladite partie de trafic vers l'objet mobile via au moins ledit deuxième nœud dudit réseau.

La mise en œuvre de l'invention permet alors de bloquer (ou tout au moins circonscrire) des attaques qui peuvent être protéiformes (typiquement déni de service, propagation de virus informatique, usurpation d'identité à des fins de vol de données, « ransomware », etc.) sur des cibles ou relais servant à propager le trafic d'attaque qui peuvent être extrêmement variés (terminaux fixes et mobiles, objets connectés, serveurs Web, ressources réseau, préfixes IP, etc.). A ce titre, la mise en œuvre de la présente invention permet, via les différents modes de réalisation proposés, de résoudre les problèmes techniques suivants qui sont habituellement de nature à pénaliser l'efficacité d'une architecture classique de type DOTS.

Les politiques de sécurité mises en place par les opérateurs reposent essentiellement sur des filtres de trafic activés à différents endroits fixes et statiques du réseau (routeurs, pare-feu, commutateurs d'accès à des infrastructures cloud, équipements d'accès et de collecte de trafic, etc.) et la complexité de leur ajustement dynamique en fonction d'une attaque en cours est proportionnelle à l'amplitude de l'attaque et aux capacités d'intervention de l'opérateur. Au contraire, l'invention offre une protection « modulable » et « ajustable » en fonction de l'attaque.

L'accès aux ressources impliquées dans la mise en place de politiques de sécurité peut être compromis lorsqu'une attaque est en cours et que celle-ci affecte notamment tout ou partie de ces ressources. Il est particulièrement difficile voire impossible d'accéder à ces ressources, de modifier une configuration ou d'installer des correctifs alors qu'une attaque est en cours. L'invention offre une solution à ce problème en permettant une extension capacitaire des ressources du réseau et la redirection du trafic.

Par ailleurs, dans l'état de la technique, le trafic d'attaque est propagé dans le réseau au risque de dégrader le niveau de qualité associé aux services souscrits par les utilisateurs ; l'efficacité d'acheminement du trafic légitime est ainsi dégradée par la propagation du trafic d'attaque. Cette approche peut impacter la qualité d'expérience associée à ce réseau. Au contraire l'invention préserve la qualité d'expérience offerte par le réseau en proposant une redirection du trafic et en permettant une intervention de mitigation au plus proche de la cible de l'attaque et/ou de la source grâce à la mobilité des objets impliqués dans la mitigation.

En outre, dans les techniques conventionnelles, le traitement des requêtes de mise en œuvre d'actions de mitigation peut être éloigné de l'endroit où l'attaque a été détectée, au risque de pénaliser le temps à partir duquel les actions de mitigation seront efficaces. Le service DPS doit idéalement pouvoir être sollicité et agir au plus près de l'endroit où l'attaque a été détectée, ce qui est permis par l'invention grâce à la mobilité des objets qui peuvent ainsi intervenir au plus proche de la cible et/ou de la source de l'attaque.

Enfin, l'invention ne requiert pas l'utilisation de tunnels pour joindre un service DPS, qui comme mentionnée précédemment, n'est pas optimale, les tunnels étant des vecteurs d'attaque privilégiés.

D'autres caractéristiques, détails et avantages de l'invention apparaîtront à la lecture de la description détaillée ci-après, et à l'analyse des dessins annexés, sur lesquels :
**Fig. 1**
   [Fig. 1] illustre un exemple d'attaque (avant une sollicitation DOTS),
**Fig. 2**
   [Fig. 2] illustre un exemple d'attaque (après la sollicitation DOTS),
**Fig. 3**
   [Fig. 3] illustre schématiquement des canaux DOTS (de signalisation et de données),
**Fig. 4**

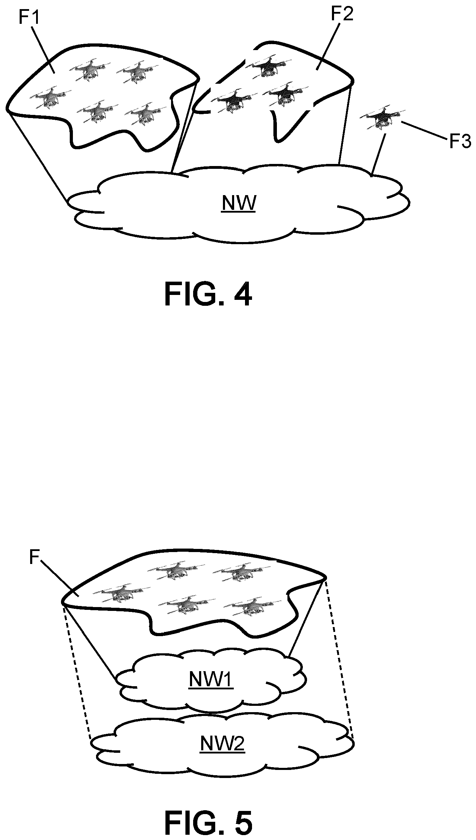

   [Fig. 4] illustre un exemple de réseau protégé par plusieurs flottes d'objets mobiles (ici des **drones),**
**Fig. 5**
   [Fig. 5] illustre un exemple d'un réseau protégé ici par plusieurs flottes,
**Fig. 6**

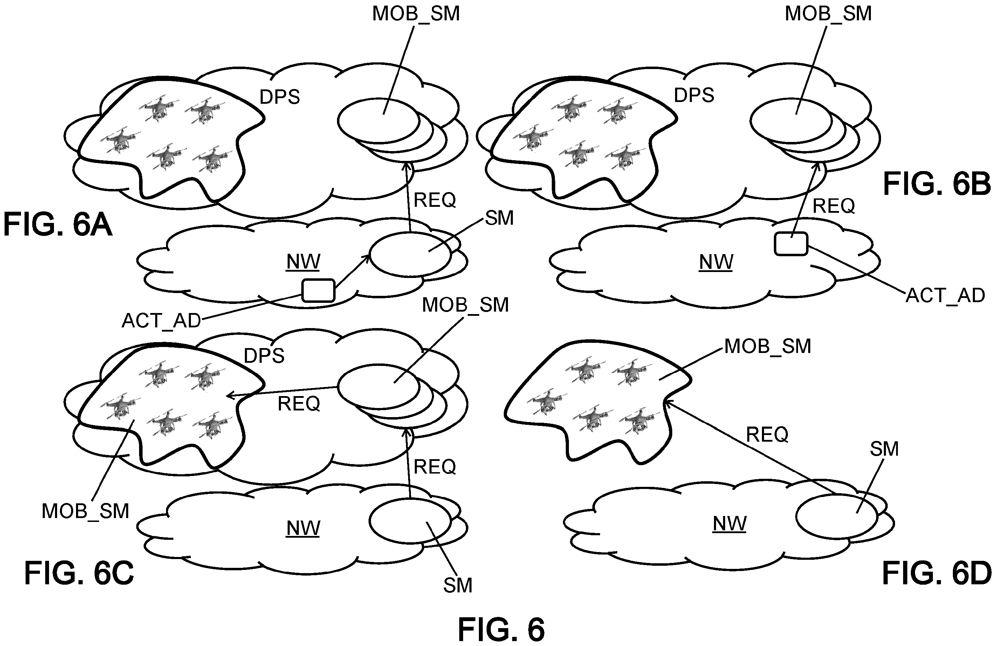

   [Fig. 6] illustre différents cas (A à D) d'exemples de configurations possibles pour la mise en œuvre du procédé ci-avant,
**Fig. 7**

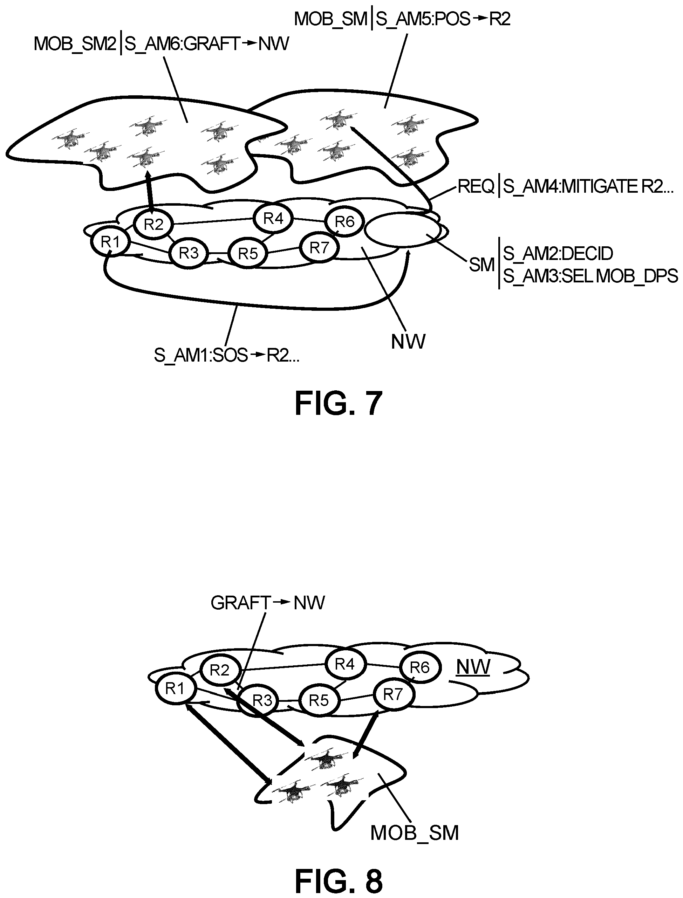

   [Fig. 7] illustre un exemple d'activation des actions de mitigation déclenchées à la suite d'une requête émise par un agent localisé dans le réseau,
**Fig. 8**
   [Fig. 8] illustre un exemple d'activation de la mitigation déclenchée depuis une flotte mobile,
**Fig. 9**

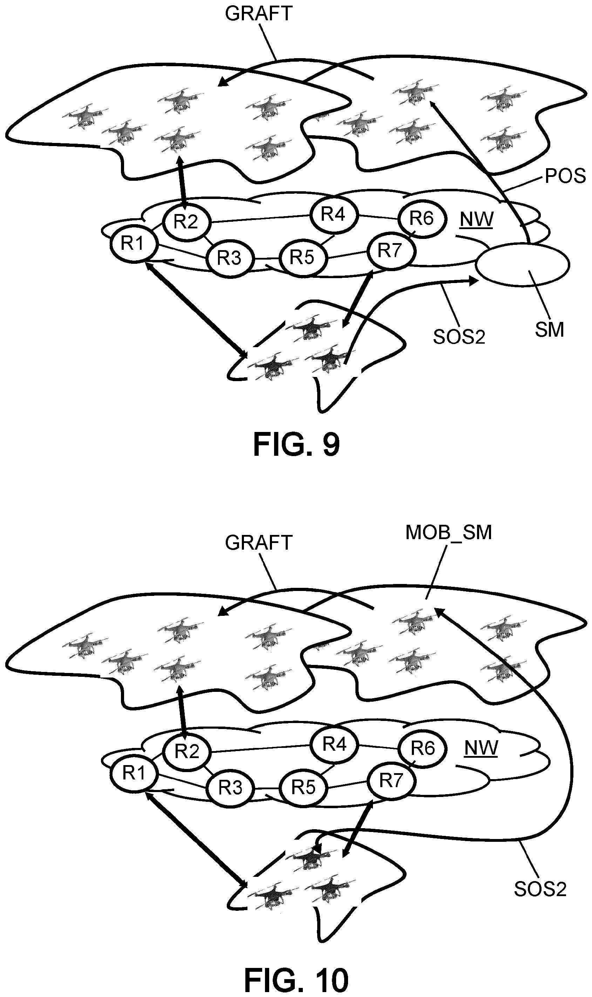

   [Fig. 9] illustre un exemple d'activation de la mitigation déclenchée depuis une flotte mobile dans un cas où le serveur de mitigation ne fait pas partie de la flotte de surveillance,
**Fig. 10**
   [Fig. 10] illustre un exemple d'activation de la mitigation déclenchée depuis une flotte mobile sollicitée par la flotte de surveillance,
**Fig. 11**
   [Fig. 11] illustre un exemple de lancement des actions de mitigation depuis un serveur de mitigation « statique » (non mobile, non embarqué dans une flotte de drones),
**Fig. 12**
   [Fig. 12] illustre un mode de réalisation d'une extension locale de capacité par usage d'un drone,
**Fig. 13**
   [Fig. 13] illustre une variante de réalisation d'une extension locale relativement à la figure 12,
**Fig. 14**
   [Fig. 14] illustre un mode de réalisation d'une extension de capacité en « parallèle » ou « bypass », alternatif du mode illustré sur les figures 12 et 13,
**Fig. 15**
   [Fig. 15] illustre un exemple de mitigation avec intervention d'un seul drone,
**Fig. 16**

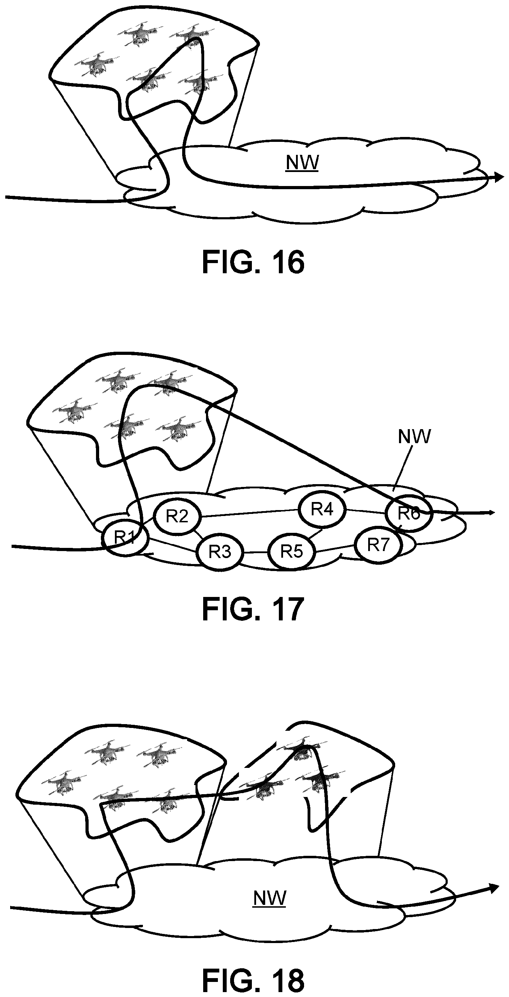

   [Fig. 16] illustre un exemple de filtrage de trafic suspect au sein du réseau NW par « scrubbing » mobile,
**Fig. 17**
   [Fig. 17] illustre un autre exemple de redirection de trafic au sein du réseau NW par « scrubbing » mobile,
**Fig. 18**
   [Fig. 18] illustre un exemple de coopération de plusieurs flottes pour l'acheminement de trafic pendant un incident de sécurité,
**Fig. 19**

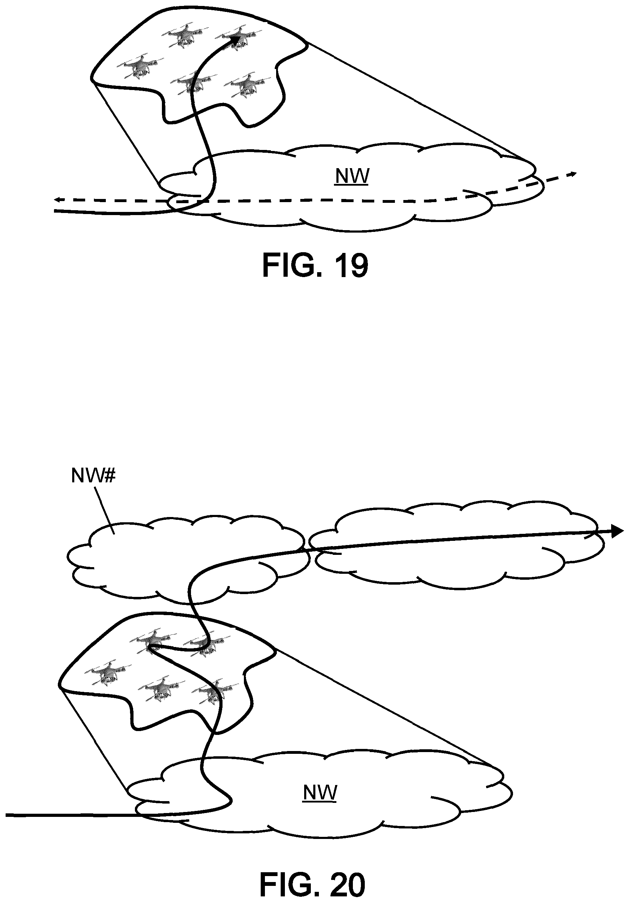

   [Fig. 19] illustre un exemple d'interception du trafic indésirable « offload »,
**Fig. 20**
   [Fig. 20] illustre un exemple d'intervention pour acheminer le trafic sortant du réseau NW,
**Fig. 21**

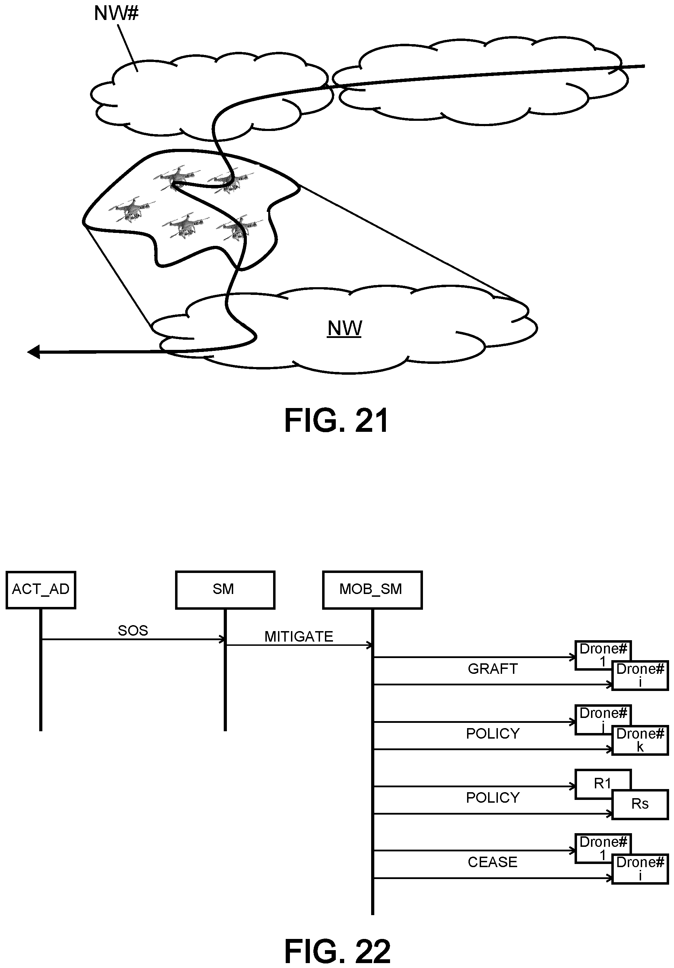

   [Fig. 21] illustre un exemple d'intervention pour acheminer le trafic entrant au réseau NW,
**Fig. 22**
   [Fig. 22] illustre un exemple d'échange de messages pour la mise en œuvre des opérations de mitigation mobiles,
**Fig. 23**

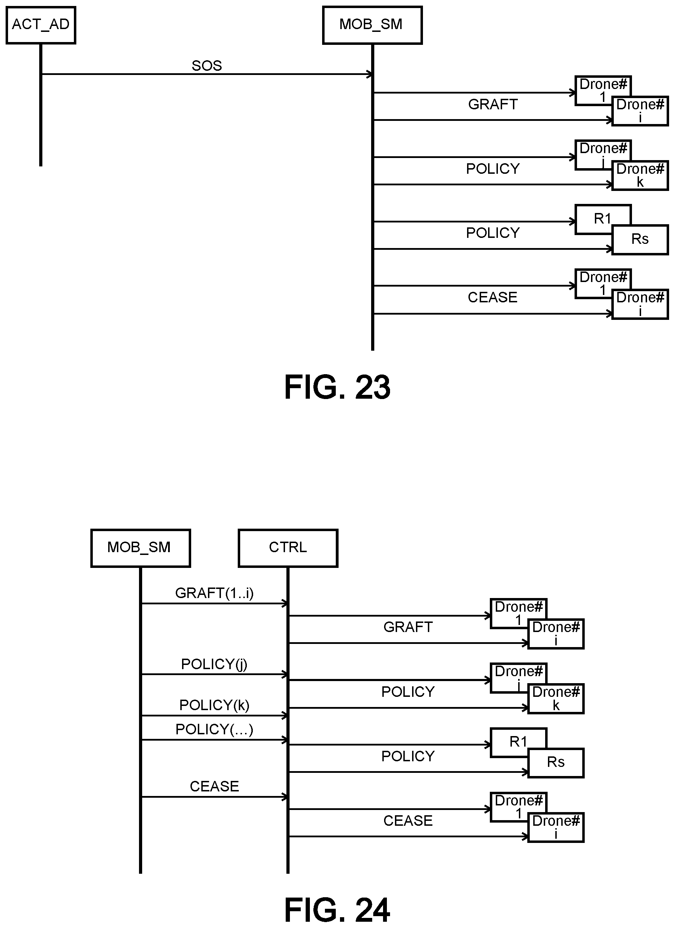

   [Fig. 23] illustre un exemple alternatif d'échange de messages pour la mise en œuvre des opérations de mitigation mobiles,
**Fig. 24**
   [Fig. 24] illustre encore un autre exemple d'échange de messages ici via un contrôleur de flotte, et
**Fig. 25**
   [Fig. 25] résume les principales étapes d'un exemple de procédé au sens de l'invention.

Le procédé décrit ci-après s'applique à tout type d'objet mobile (drone, voiture autonome, ballon stratosphérique, avion qui embarque un ou plusieurs routeurs, etc.), même si par la suite, il est utilisé et représenté sur les figures des drones pour des besoins d'illustration. Ainsi, on entend ci-après par « drone » un aéronef inhabité (« Unmanned aerial vehicle » (UAV)), ou encore un véhicule terrestre inhabité (« Unmanned ground vehicle » (UGV)), etc., de manière générale et sans hypothèse particulière quant aux capacités de mouvement et d'autonomie de ce drone.

Les exemples d'attaques ci-après portent sur les attaques par déni de service, mais la solution décrite s'applique à d'autres types d'attaques, telles que la propagation de virus informatiques, l'exploitation des vulnérabilités des systèmes d'exploitation, etc.

La solution proposée est récursive : une flotte d'objets mobiles peut être utilisée à des fins de mitigation d'un réseau composé d'autres objets mobiles (par exemple, un réseau composé d'avions, un réseau véhiculaire (Vanet, « Vehicular Ad-Hoc Network »), un réseau MANET (Mobile Ad-hoc Networks)).

La solution ne décrit pas comment une flotte mobile peut se restructurer (par exclusion d'un drone de la topologie par exemple, ou par activation de nouvelles connexions, mutation/évolution de topologie, etc.) pour se protéger d'une attaque subie par la flotte elle-même.

Par ailleurs, la structuration fonctionnelle d'un service DPS ainsi que son interaction avec la/les ressources à protéger sont connues de l'homme du métier et la description ci-après ne détaille pas ces aspects particuliers.

Les sessions de communications entre les différents éléments décrits ci-après sont établies par exemple en utilisant le protocole DTLS (Datagram Transport Layer Security), notamment mais non exclusivement sa version 1.3, ou encore le protocole TLS (Transport Layer Security), par exemple sa version 1.2 ou 1.3. Les détails des échanges (D)TLS et ceux concernant la gestion des clés de sécurité ne sont pas reproduits dans ce qui suit.

En outre, on suppose ici que les différents éléments considérés dans le cadre de l'invention et destinés à interagir (ex. objets mobiles, serveur de mitigation, éléments (aussi appelés nœuds) du réseau, agents, etc.) doivent s'authentifier mutuellement. Ainsi, les messages reçus d'une source usurpant l'identité d'un élément légitime peuvent être rejetés par un autre élément. De la même manière, les demandes des nœuds du réseau non-habilités à accéder au service DPS mobile décrit ci-après sont ignorées. On suppose dans la suite que cette procédure d'authentification mutuelle est mise en place par les différents éléments considérés (objet mobile, serveur de mitigation, nœuds du réseau, agent, etc.).

De manière générale, une ou plusieurs flottes d'objets mobiles sont déployées pour la surveillance et la mitigation d'attaques subies par des réseaux ou des terminaux/serveurs connectés à ces réseaux. Ainsi des flottes d'objets mobiles distinctes peuvent être considérées pour la surveillance du réseau d'une part et pour les opérations de mitigation d'autre part. En variante, une (ou plusieurs) même flotte d'objets mobiles peut assurer les fonctions de surveillance et de mitigation.

Par ailleurs, on considère à titre général ce qui suit.

Les actions de mitigation peuvent impliquer des éléments de bordure d'un réseau (par exemple des routeurs « ASBR », pour « Autonomous System Border Router ») ou des éléments de transit au sein de ce réseau. Par ailleurs, la mise en œuvre de l'invention peut permettre de traiter le cas de sources à l'origine d'une attaque pouvant être hébergées au sein même de l'infrastructure réseau à protéger (cas typique des attaques « Man-in-the-Middle » (MITM), par exemple). Les actions de mitigation peuvent porter sur le trafic (entrant, sortant, ou les deux - avec par exemple, une création dynamique d'un puits de trafic destiné à éliminer le trafic d'attaques), et impliquer un ou plusieurs nœuds.

On ne fait pas d'hypothèse particulière concernant la topologie du réseau sous-jacent ni sur la typologie du trafic qu'il achemine. En effet, un réseau peut être un réseau d'opérateur, mais également un réseau tel que celui utilisé par les fournisseurs de connectivité IP ou de contenu (CDN, pour « Content Delivery Network »), ou encore un réseau de voitures autonomes, un réseau de capteurs, un réseau de connectivité composé d'avions, etc.

Conformément à l'invention et comme mentionné précédemment, un même réseau peut être protégé par une ou plusieurs flottes d'objets mobiles. En référence à l'exemple de la figure 4, trois flottes de drones protègent le même réseau NW. Ces trois flottes F1, F2, F3 ont des portées distinctes (et ainsi des périmètres d'intervention différents). Les flottes qui protègent un même réseau peuvent également avoir le même périmètre d'intervention.

Par ailleurs, une même flotte peut protéger un ou plusieurs réseaux sous-jacents. En référence à l'exemple de la figure 5, une même flotte de drones F peut protéger deux réseaux (NW1 et NW2). Tout ou partie des drones composant la flotte F peuvent participer simultanément à des opérations de mitigation sur des segments de ces deux réseaux. Dans ce cas, des identifiants de réseau, appelés « network_id », sont utilisés pour identifier un réseau d'une manière non ambiguë.

L'identifiant « network_id » peut être :
- un identifiant de réseau PLMN (« Public Land Mobile Network »),
- un numéro de système autonome ou « AS » (pour « Autonomous System »), etc.

Chaque flotte est composée d'un ou plusieurs objets mobiles. Chaque objet est identifié par un identifiant unique appelé « object_id ». Cet identifiant peut être un alias, un nom de domaine, une adresse IP, une URI (Uniform Resource Identifier), un numéro E.164 comme par exemple MSISDN (Mobile Station ISDN Number), ou autre. En référence à l'exemple de la figure 4, la première flotte F1 (respectivement, deuxième F2 et troisième F3) est composée de 5 objets (respectivement, 3 et 1).

La taille d'une flotte, le dimensionnement (c'est-à-dire, la capacité de trafic pouvant être écoulé/acheminé/traité par une flotte), les services offerts, la portée géographique, etc. sont spécifiques à chaque flotte.

Une même flotte peut être composée d'objets mobiles de différents types. Par exemple, une flotte peut être composée de véhicules UAV, UGV (définis plus haut) et/ou encore de voitures autonomes. Ces différents objets se coordonnent pour l'exécution des tâches de mitigation requises.

Une flotte peut embarquer au moins une fonction service « serveur de mitigation » ou s'interfacer avec un ou plusieurs serveurs de mitigation externes. Ces serveurs de mitigation peuvent aussi être des serveurs fixes ou appartenir à une autre flotte mobile.

La fonction « serveur de mitigation » peut être rendue par une même instance logicielle ou être composée de plusieurs fonctions service, élémentaires, grâce aux techniques de chaînage fonctionnel de service (SFC, Service Function Chaining). Ces fonctions service peuvent être embarquées dans des nœuds physiques distincts.

Plusieurs flottes peuvent avoir une configuration identique (taille, dimensionnement, services, etc.). Toutefois, une flotte peut être modifiée dynamiquement pour inclure de nouveaux objets ou supporter de nouveaux services. Par exemple, l'exécution d'une nouvelle fonction de mitigation peut nécessiter l'introduction d'un drone supplémentaire, l'augmentation de la capacité de traitement et d'acheminement de la flotte, la connexion à d'autres réseaux, etc. Ces décisions peuvent relever par exemple d'un contrôleur (externe) responsable de la gestion de la flotte, ou encore d'une ou de plusieurs fonctions « contrôleur » embarquées par certains des drones de la flotte.

Une flotte d'objets mobiles peut être connectée à un ou plusieurs autres réseaux différents du réseau qu'elle protège, par exemple pour optimiser l'écoulement du trafic (par exemple réseau 5G, 4G, WLAN, etc.).

La communication entre deux objets mobiles d'une même flotte peut être directe (c'est-à-dire via des associations sans réseau intermédiaire) ou indirecte (par exemple via un réseau étendu tel qu'un réseau 4G ou 5G). La sélection du mode de communication se fait selon le contexte de la communication (par exemple la communication directe est utilisée pour l'écoulement du trafic d'une attaque, alors que la communication indirecte peut être utilisée pour instruire un objet mobile de se positionner dans une zone d'intervention). Les deux modes de communication peuvent être maintenus simultanément.

De manière générale, plusieurs flottes peuvent s'interconnecter pour des besoins de coordination et d'efficacité dans l'exécution des actions de surveillance et/ou de mitigation.

En référence maintenant à la figure 25, un procédé général au sens de l'invention peut commencer par exemple par une étape de détection et de déclenchement d'opérations de mitigation S-AM (pour « ACTIVATION_MITIGATION »).

Il s'agit d'une activation (ou déclenchement) des opérations de mitigation via au moins une flotte. Ici, un serveur de mitigation décide des actions à mener pour qu'une flotte d'objets mobiles dite « de mitigation » se connecte au réseau où une attaque a été détectée (comme présenté plus loin en référence à l'étape S-RR pour « RATTACHEMENT_RESEAU »), mais également des actions de mitigation à exécuter (étape S-AM). Les actions de mitigation comprennent en particulier l'identification d'une politique de routage de trafic dans le réseau qui permet d'identifier en particulier le ou les nœuds du réseau auxquels la flotte doit se connecter.

Les phases de connexion et de mitigation ne font pas forcément l'objet d'une chronologie particulière : des actions de mitigation peuvent être définies et préparées (par exemple, construction de nouveaux filtres de trafic, mise à jour de la base de données maintenue par le serveur de mitigation et descriptive des attaques en cours de traitement notamment, etc.) sans que la flotte d'intervention soit connectée au préalable au réseau où une attaque a été détectée.

On suppose ici que des agents de sécurité dédiés ACT-AD sont activés au sein du réseau. Un ou plusieurs agents de sécurité peuvent en effet être actifs dans le réseau. La sélection des nœuds du réseau embarquant ces agents actifs est une décision locale à l'opérateur du réseau. Typiquement, ces agents ACT-AD ont pour mission d'analyser le trafic, les compteurs d'interfaces ainsi que d'autres évènements pertinents de nature à rendre un trafic suspect (changement fréquent des annonces de routes, nombre important de messages d'erreur ICMP (pour « Internet Control Message Protocol »), ou autres) et de déterminer ensuite si une aide est nécessaire de la part d'un serveur de mitigation, en cas de détection d'attaque (avérée ou non).

Il convient de noter qu'un agent peut être embarqué dans un nœud du réseau concerné par une attaque en cours. De même, l'agent peut détecter une attaque qui concerne un autre nœud du réseau. Le nœud qui a détecté l'attaque peut être impliqué (ou non) dans l'exécution du plan de mitigation.

On rappelle qu'au sens de l'invention, un nœud nécessitant une intervention de mitigation est un nœud typiquement identifié dans un plan de mitigation comme étant la cible, la source ou la victime collatérale d'une attaque, ou encore un nœud impliqué dans la mise en place de ce plan de mitigation (par exemple, en exécutant une politique de redirection de trafic, en modifiant sa table de routage).

Le réseau demande ainsi de l'assistance SOS, par exemple via l'un de ces agents de sécurité dédiés ACT-AD qu'il embarque.

Un exemple du déroulement de la demande d'assistance et de son traitement est détaillé sur la figure 7. Un agent réseau R1 envoie un message nommé par exemple SOS (à l'étape S-AM1) pour indiquer au moins une cible suspectée (par exemple un nœud R2, un préfixe IP, ressource réseau, ou autres) à au moins un serveur de mitigation SM, appartenant ici au réseau NW. Ce dernier décide après analyse de la demande de solliciter au moins une flotte mobile de mitigation (désignée par « flotte mobile » dans la suite par souci de simplification), par exemple une flotte mobile composée de drones. Plusieurs messages SOS peuvent être reçus par le serveur SM.

Le message SOS (target, type,...) peut comprendre notamment les champs suivants :
- un champ « target » indiquant la cible concernée par la demande. Une cible peut être un préfixe IP, une adresse IP, un nœud, une liste de nœuds, un segment réseau, une interface réseau, etc. Un nœud est identifié par un identifiant unique comme une adresse IP, un alias, un nom de domaine, une localisation géographique, etc. Un segment réseau est identifié par un numéro de système autonome AS (privé), un identifiant d'aire selon le protocole de routage OSPF (« Open Shortest Path First »), une localisation géographique, un alias, etc. Dans le cas où aucune cible n'est indiquée dans le message SOS, cela peut signifier conventionnellement que la source du message SOS est la cible-même de l'attaque ;
- un champ optionnel « type » qui renseigne le type de l'attaque en cours. Le serveur de mitigation peut ignorer cette information.

D'autres informations peuvent être incluses dans le message SOS tel que l'identifiant d'un réseau (network_id) ou autre.

Sur réception de ce message SOS, le serveur de mitigation SM du réseau NW :
- décide en fonction du message SOS de mettre (ou de ne pas mettre) en œuvre un plan de mitigation qui utilisera les ressources de la flotte mobile (étape S-AM2),
- et sélectionne le cas échéant un serveur de mitigation de la flotte mobile ou en liaison avec (i.e. connecté à) la flotte mobile (référencé MOB-SM sur la figure 7), à l'étape S-AM3.

Des informations pour caractériser l'anomalie ainsi que les nœuds du réseau concernés sont alors communiqués par le serveur de mitigation SM du réseau NW à ce serveur de mitigation MOB-SM en liaison avec la flotte mobile, dans un message de requête de mitigation nommé ici MITIGATE, à l'étape S-AM4.

Ce message MITIGATE (network_id, target, type, ...) peut comprendre notamment les champs suivants:
- un champ « network_id » comprenant un identifiant unique d'un réseau, tel qu'un numéro d'AS : cet identifiant peut être requis si un serveur de mitigation (respectivement la flotte mobile) est en contact avec plusieurs réseaux et que l'identité du réseau auquel la cible « target » est connectée (ou la cible fait partie du réseau lui-même) ne peut pas être déduite des paramètres de l'association de sécurité utilisée pour transmettre la requête ;
- un champ « target » ayant la même structure que celui du message SOS de l'étape S-AM1 : ce champ peut être identique à celui reçu dans un message SOS ou bien modifié par un serveur de mitigation en raison de la nature de l'attaque et des informations supplémentaires dont dispose le serveur de mitigation telles que la topologie du réseau ou les données de supervision du réseau, par exemple. Ce champ indique le ou les nœuds réseau (respectivement, les ressources IP (par exemple, préfixe(s) IP)) qui nécessitent une intervention de mitigation;
- un champ « type » qui renseigne le type de l'attaque en cours, cette information pouvant être utilisée dans la phase de sélection d'un service DPS mobile. Le service DPS repose sur la définition et la mise en place de plans de mitigation qui exploitent notamment des flottes d'objets mobiles conformément à l'invention.

D'autres informations peuvent être incluses dans ce message MITIGATE, telles qu'une échéance de mitigation (immédiate ou différée, durée de l'intervention, etc.), ou autres.

A l'étape suivante S-AM5, le serveur MOB-SM coordonne (éventuellement avec d'autres membres de la flotte mobile) le positionnement optimal de la flotte mobile afin qu'au moins un des objets mobiles (selon l'ingénierie de raccordement de la flotte mobile au réseau, l'ingénierie pouvant être dérivée de la politique de routage associée au plan de mitigation) de ladite flotte puisse se connecter au réseau NW et que la flotte mobile puisse exécuter les actions de mitigation. A cet effet, on note qu'il est suffisant qu'un objet mobile soit positionné à portée radio du nœud du réseau sur lequel il doit intervenir.

Pour obtenir la position des nœuds du réseau et/ou des objets mobiles, le serveur peut disposer (localement ou via une entité externe) d'une carte de localisation des différents objets de la flotte (par exemple, coordonnées GPS, fonctions supportées, charge, état de la batterie) ainsi que la localisation des nœuds (éléments) du réseau protégé. Si les nœuds du réseau sont statiques, une telle localisation est connue de l'opérateur du réseau.

La carte de localisation peut être alimentée par les nœuds eux-mêmes et/ou par les objets de la flotte, en remontant leurs positions géographiques. A cet effet, les objets mobiles peuvent embarquer un récepteur GnSS (pour Global navigation Satellite System) qui leur permettent de signaler leur position géographique. Les nœuds du réseau peuvent annoncer leur position géographique en utilisant les ressources d'un protocole de routage dynamique qu'ils activement, comme par exemple pour le protocole OSPF les extensions décrites dans le document de A. Lindem et al. intitulé « OSPF Extensions for Advertising/Signaling Geo Location Information », 18 octobre 2017.

La carte de localisation peut également être alimentée par les nœuds voisins et/ou les objets de la flotte voisins des nœuds et objets concernés, qui établissent des tables d'adjacence pour des besoins de routage. Ceci peut être envisagé par exemple lorsque l'un des nœuds nécessitant une intervention de mitigation n'est pas en mesure de remonter sa position géographique. Les tables d'adjacence liées à l'activation d'un protocole de routage dynamique fournissent pour chaque nœud (respectivement chaque objet mobile), la liste de ses nœuds voisins et/ou de ses objets mobiles voisins. En mettant en œuvre une technique de triangulation, il est possible à partir de la position géographique des nœuds voisins et/ou des objets mobiles voisins du nœud attaqué de déduire sa position géographique et de dépêcher un objet de la flotte mobile à proximité de ce nœud.

La flotte mobile se raccorde ainsi au réseau via un ou plusieurs objets mobiles, et selon l'une des formes de réalisation décrites plus loin en référence à l'étape principale suivante S-RR (« RATTACHEMENT_RESEAU »).

Dans une réalisation alternative de la première étape principale S-AM1, c'est une flotte mobile de surveillance qui détecte elle-même une anomalie qui nécessite des actions de mitigation. Trois sous-variantes sont présentées ci-après à titre d'exemples.

La première sous-variante suppose que la mitigation est assurée par la même flotte mobile de surveillance. Ainsi, en référence à la figure 8, la flotte décide qu'une action de mitigation est nécessaire car après analyse du trafic, le serveur de mitigation MOB-SM en liaison avec cette flotte sélectionne au moins un objet mobile pour qu'il se connecte au réseau NW. Ce choix peut également résulter de la décision de ne pas faire intervenir une autre flotte, selon une procédure de sélection de flotte d'intervention mise en œuvre par le serveur de mitigation MOB-SM.

Les informations pour procéder au raccordement de la flotte au réseau où l'attaque a été détectée sont communiquées à ces objets à l'aide d'une procédure dite « de greffe » (« GRAFT », en anglais).

Les messages associés à la procédure GRAFT (désignés ici par messages GRAFT(network_id, list(object_id, list(peer_id), ...)) intègrent les informations suivantes :
- un champ « network_id » comprenant l'identifiant du réseau auquel une flotte mobile doit se connecter. Cet identifiant n'est pas inclus dans un message s'il n'y a pas d'ambiguïté dans la sélection de ce réseau (par exemple, les objets d'une flotte sont exclusivement dédiés aux opérations de mitigation d'un seul réseau). Cette information est typiquement utilisée pour la sélection et la mise en œuvre des mécanismes d'établissement d'associations de sécurité avec ce réseau ;
- un champ List (object_id, List(peer_id)) indiquant un ou plusieurs identifiants d'objets (object_id) : chaque objet est typiquement associé avec un ou plusieurs nœuds voisins (désignés par des identifiants peer_id), un nœud voisin désignant un nœud du réseau avec lequel un objet mobile doit se connecter. Un identifiant d'objet ou de voisin peut être structuré comme une adresse IP, un alias, un nom de domaine, etc. L'identifiant d'objet peut être omis si le destinataire du message est l'objet concerné. L'information List(object_id, list(peer_id)) peut être omise si la sélection des objets ainsi que les points de connexion au réseau (nœuds) est implémentée d'une manière distribuée (avec un ordre prédéfini conventionnellement) par les objets de la flotte. Une liste d'objets est insérée si le message est destiné typiquement à un contrôleur de flotte DPS mobile qui se charge ensuite de générer des messages destinés aux objets concernés. Ces messages n'incluront que les consignes associées à chaque objet concerné.

D'autres informations peuvent être incluses dans les messages GRAFT telles qu'une échéance de connexion (immédiate ou différée, durée de la connexion, etc.), une zone géographique, etc.

Ensuite, la flotte se raccorde au réseau comme décrit plus loin en référence à l'étape principale suivante S-RR (« RATTACHEMENT_RESEAU »).

Une deuxième sous-variante suppose que la mitigation est coordonnée par un serveur de mitigation externe à la flotte de surveillance comme illustré sur la figure 9. La flotte de surveillance décide de contacter un serveur de mitigation SM après analyse du trafic et détection d'une anomalie en envoyant un message SOS2 vers ce serveur de mitigation externe SM. Le serveur de mitigation sélectionne une flotte mobile de mitigation voire au moins un drone d'une flotte mobile de mitigation (flèche POS) pour qu'il se connecte au réseau où l'attaque a été détectée. Les informations pour procéder au raccordement de la flotte de mitigation ou du drone sélectionné au réseau sont communiquées à ces derniers à l'aide d'un message GRAFT tel que mentionné précédemment. Ensuite, la flotte mobile de mitigation se connecte au réseau comme décrit plus loin en référence à l'étape principale suivante S-RR (« RATTACHEMENT_RESEAU »).

Une troisième sous-variante suppose que les actions de mitigation sont déclenchées à partir d'une autre flotte mobile de mitigation suite à un message de demande de mitigation reçu de la flotte de surveillance comme illustré sur la figure 10. Dans l'exemple de cette figure, une flotte de surveillance est responsable de la supervision, de l'analyse et de la décision de solliciter une autre flotte de mitigation. Un message SOS2 similaire à celui de la figure 9 est envoyé vers une flotte de mitigation sélectionnée par la flotte de surveillance pour ses capacités à traiter le type d'attaque constatée, selon des informations d'identification, de localisation de l'intervention et de description de l'attaque, qui sont communiquées à cette flotte de mitigation par la flotte de surveillance (via un message GRAFT tel que décrit précédemment). Cette flotte de mitigation se positionne de manière optimale selon les informations communiquées dans le message GRAFT afin qu'elle puisse se connecter au réseau et procéder aux opérations de mitigation. Ensuite la flotte de mitigation se raccorde au réseau comme décrit plus loin en référence à l'étape principale suivante S-RR (« RATTACHEMENT_RESEAU »).

Dans une réalisation alternative illustrée sur la figure 11, un service de protection d'attaques (DPS) décide sur la base d'informations fournies par d'autres moyens qu'un message SOS notamment (par exemple configuration, rapport de supervision, ou autre) de solliciter au moins une flotte de mitigation. Les procédures de communications et les interactions avec le réseau et ses composantes sont identiques à celles présentées plus haut.

En outre, le réseau, et les flottes qui le protègent (flottes de surveillance et/ou de mitigation), peuvent être exploités par un même opérateur ou par des opérateurs distincts. La figure 6 illustre quelques exemples de mise en œuvre :
- le service DPS ainsi que le réseau sont exploités par la même entité et la mitigation est gérée par le serveur de mitigation SM du réseau NW (Cas figure « 6D »),
- ou le réseau supporte un service DPS local mettant en œuvre un serveur de mitigation SM, qui s'interface avec un autre service DPS externe, mettant en œuvre un serveur de mitigation MOB-SM en lien avec la flotte (Cas figure « 6A » et figure « 6C »),
- ou le réseau utilise exclusivement un service DPS tiers (Cas figure « 6B »), sans serveur de mitigation SM du réseau NW,
d'autres configurations encore étant également possibles.

Ainsi, en référence à la figure 25, la première étape principale S-AM peut se résumer par exemple comme suit :
- des agents de sécurité du réseau ACT-AD (actifs) peuvent identifier un trafic suspect. Dans ce cas, les agents ACT-AD indiquent (éventuellement, car le serveur de mitigation peut aussi déterminer cette information en fonction de la localisation de l'agent dans le réseau) les nœuds du réseau NW qui subissent une attaque ou qui sont susceptibles d'être attaqués, les nœuds à protéger ou des sources d'une attaque dans un message SOS à destination d'un serveur de mitigation SM connu des agents actifs,
- le serveur de mitigation SM décide si le trafic suspect relève effectivement d'une attaque avérée, et, s'il n'est pas en liaison avec une flotte mobile de mitigation, sélectionne un serveur de mitigation MOB-SM en liaison avec (ou appartenant à) une telle flotte mobile, et lui adresse un message de requête de mitigation REQ qui peut reprendre certaines des données du message SOS,
- le serveur de mitigation MOB-SM qui est en liaison avec (ou appartenant à) la flotte mobile de mitigation déclenche alors l'opération de mitigation et définit en particulier, d'après les données du message REQ, les objets mobiles (ex. drones) adéquats et des positions adéquates POS de ces objets mobiles relativement aux nœuds du réseau NW attaqués et/ou à protéger (des nœuds à protéger pouvant être typiquement des nœuds stratégiques du réseau NW),
- le serveur de mitigation MOB-SM qui est en liaison avec (ou appartenant à) la flotte mobile de mitigation envoie alors (directement ou via un contrôleur) un ou plusieurs messages GRAFT aux objets mobiles adéquats précités, ces messages GRAFT indiquant notamment les positions que les objets mobiles adéquats doivent occuper pour se connecter à un ou plusieurs nœuds cibles du réseau nécessitant une intervention.

En particulier, la position géographique d'un objet mobile tel un drone se connectant à un nœud du réseau est choisie pour être en liaison directe (une liaison radio, par exemple) avec ce nœud sans passer par un nœud intermédiaire risquant lui-même d'être attaqué.

En référence à nouveau à la figure 25, un procédé général au sens de l'invention peut également comprendre une deuxième étape générale de connexion au réseau S-RR, par exemple. Il s'agit d'une étape de connexion au réseau car, afin de mettre en place des actions de mitigation, une flotte d'objets mobiles peut être dépêchée sur zone et se connecter au réseau selon l'un des deux modes décrits ci-après.

L'endroit choisi du réseau pour connecter la flotte prend en compte plusieurs critères comme :
- être au plus près de la source d'une attaque,
- être au plus près d'une victime de l'attaque,
- protéger un nœud stratégique,
ou autre.

Ces critères peuvent être pris en compte pour l'identification :
(1) du (ou des) nœud(s) du réseau qui nécessite(nt) une intervention de mitigation et
(2) de la politique de routage du plan de mitigation.

Le message GRAFT (présenté précédemment) est utilisé pour communiquer à un objet mobile l'ordre de se connecter à un réseau, alors qu'un message nommé CEASE (network_id, list(local_node_id, list(peer_id)), ...) est utilisé pour ordonner à un objet de se déconnecter d'un réseau, comme on le verra plus loin en particulier en référence à l'étape S-DESAC.

Les arguments consignés dans un message CEASE sont similaires à ceux d'un message GRAFT mais néanmoins:
- ce message peut être envoyé à ou depuis un nœud du réseau et
- ce message ne concerne que les opérations de déconnexion.

Par ailleurs, un message nommé POLICY est utilisé pour communiquer à un objet un ensemble d'instructions caractéristiques de la mise en place des mesures de mitigation adaptées à la nature de l'attaque. Il peut s'agir par exemple:
- d'un ordre à l'objet mobile de se déplacer vers un nouveau positionnement,
- d'effectuer un traitement spécifique (par exemple, marquage, conditionnement, destruction, etc.) de tout ou partie du trafic redirigé via la flotte,
- d'ajouter une entrée dans une base FIB (« Forwarding Information Base ») ou une base RIB (« Routing Information Base ») maintenues par les nœuds du réseau et/ou les objets mobiles. De telles tables permettent aux nœuds et aux objets mobiles de consigner notamment les routes qui permettent d'acheminer le trafic vers telle ou telle destination,
- d'ordonner une activation ou une mise à jour d'un filtre ACL (« Access Control List »), etc.

Le message POLICY peut aussi être utilisé pour interagir avec des nœuds du réseau depuis la flotte.

La structure du message POLICY(network_id, list(object_id, list(action)), ...) repose sur les informations suivantes :
- un champ « network_id » qui a la même signification que le champ « network_id » consigné dans le message GRAFT. Cette information n'est pas nécessaire quand le message POLICY est destiné à un nœud du réseau ou un objet mobile connecté à un seul réseau.
- un champ list(object_id, list(action)) indique un ou plusieurs identifiants d'objets (object_id) ; chaque objet est typiquement associé à une ou plusieurs actions de mitigation. Une action de mitigation peut être une règle de filtrage, installation d'une entrée dans la FIB/RIB, configuration d'une politique de répartition de la charge de trafic, nouveau positionnement, etc. Un identifiant d'objet peut être structuré comme une adresse IP, un alias, un nom de domaine, etc. L'identifiant d'objet peut être omis si le destinataire du message est l'objet concerné. Une liste d'objets est insérée si le message est destiné typiquement à un contrôleur de flotte DPS mobile qui se charge ensuite de générer les messages destinés aux objets concernés (et ces messages n'incluent que les consignes associées à chaque objet, par exemple).

D'autres informations/instructions peuvent être incluses dans le message POLICY, telles qu'une échéance d'application de la politique (immédiate ou différée, etc.).

Les exemples ci-après supposent que les actions de mitigation consistent en une extension capacitaire d'un nœud du réseau (autrement dit de ses ressources), voire de contournement partiel d'un nœud ou d'un segment du réseau. Cependant, les modes de connexion s'appliquent pour d'autres types d'actions de mitigation comme celles décrites dans l'étape principale générale S-ACT de la figure 25 (relative à « ACTIONS_MITIGATION »).

L'extension capacitaire peut être locale ou « parallèle » (dite aussi « bypass » ci-après).

Dans le mode d'extension locale, la connexion de la flotte de mitigation au réseau est réalisée localement par le nœud identifié dans l'ordre de connexion transmis par le serveur de mitigation dans un message GRAFT.

Après identification d'un incident qui nécessite l'intervention d'une flotte d'objets mobiles pour engager des actions de mitigation, un ordre (GRAFT) est transmis à la flotte par le serveur de mitigation pour qu'elle se positionne dans la zone concernée, le cas échéant. Ensuite, la flotte se connecte à l'élément du réseau indiqué dans le message GRAFT. Des informations pour établir une communication sécurisée (par exemple des certificats, secrets, hash, algorithmes de chiffrement, etc.) entre le nœud et la flotte peuvent aussi être communiquées via des canaux sécurisés. Les ordres communiqués à un ou plusieurs objets mobiles de se positionner dans la zone concernée, ainsi que les ordres communiqués à un ou plusieurs objets mobiles de se raccorder au réseau peuvent être formulés directement par la flotte (par exemple par un serveur de mitigation embarqué au sein de la flotte) suite à la détection d'une anomalie, ou bien encore formulés à la réception d'un message MITIGATE ou SOS ou SOS2 émis par l'un des nœuds du réseau.

Une fois la connexion au réseau établie, et en référence à l'exemple de la figure 12, la flotte d'objets mobiles (i.e. de drones ici) est considérée comme une extension capacitaire (une mémoire, des moyens de traitement (processeur, mémoire de travail, etc.), bande passante, ou autres) du nœud de réseau suspecté (référencé « R2 » dans les figures où il est représenté).

Plusieurs stratégies peuvent ainsi être adoptées pour la répartition du trafic entre le nœud « R2 » et son extension que lui fournit la flotte mobile de mitigation. Ces stratégies peuvent être configurées au préalable sur R2 par l'opérateur du réseau sous forme de politiques (de type ECA (« Event - Condition - Action »), par exemple). Il peut s'agir par exemple :
- d'un « événement » tel que le dépassement d'un seuil de trafic sur l'une des interfaces de R2,
- d'une « condition » définie en fonction de l'adresse de destination du trafic, et
- d'une « action » consistant à rediriger le trafic associé vers la flotte d'objets mobiles.

Ces politiques sont alors communiquées par la flotte d'objets mobiles à R2 lors de l'étape de raccordement S-RR via le message POLICY.

Lors des opérations de mitigation, le trafic peut être traité localement au niveau de « R2 » ou être redirigé en tout ou partie vers la flotte d'objets mobiles pour traitement. La redirection est locale à R2 (par exemple, selon des instructions « Match-Action », suivant une répartition de charge de x% via R2 et (100-x)% via la flotte). L'exemple suivant illustre une règle ECA où R2 est instruit, éventuellement à l'aide du message POLICY, pour rediriger tout le trafic destiné à une cible d'attaque d'identifiant « 1.2.3.0/24 » vers la flotte.

```
 « Event » : Activation-Interface-Flotte {
 {
 « Condition » : Dest_Prefix=1.2.3.0/24,
 « Action » : Redirect-via-Flotte_any
 }
 }
```

Un ou plusieurs objets mobiles peuvent être sollicités lorsque le trafic est redirigé vers une flotte d'objets mobiles. La sélection de l'objet mobile (« ingress », point d'entrée dans la flotte) peut être effectuée par l'élément R2 selon plusieurs modes comme ceux illustrés à titre d'exemple respectivement par les figures 12 et 13.

Un exemple d'actions communiquées à R2 dans un message POLICY pour la sélection de drones à solliciter pour des opérations de mitigation est donné ci-après : « drone1 » est choisi si le trafic est destiné au nœud 1.2.3.0/24 alors que « drone2 » est choisi pour la redirection du trafic destiné au nœud 2.3.4.0/24.

```
 « Event » : Activation-Interface-Flotte {
 {
 « Condition » : Dest_Prefix=1.2.3.0/24,
 « Action » : Redirect-via-Flotte_drone1
 },
 {
 « Condition » : Dest_Prefix=2.3.4.0/24,
 « Action » : Redirect-via-Flotte_drone2
 }
 }
```

Une fois l'action de mitigation exécutée par la flotte, le trafic légitime peut par exemple être réacheminé vers R2 qui le traite ensuite selon les règles nominales d'acheminement du réseau.

Dans le mode d'extension dite « parallèle » ou « bypass », le raccordement de la flotte de mitigation au réseau est réalisé sans impliquer le nœud victime d'un incident ou d'une attaque (R2 dans la figure 14, par exemple). R2 est dans cet exemple le nœud attaqué qui nécessite une intervention de mitigation.

Ainsi, après identification d'un incident ou d'une attaque qui nécessite l'intervention d'une flotte de mitigation pour procéder à une ou plusieurs action(s) de mitigation, un ordre est transmis à la flotte de mitigation par le serveur de mitigation pour qu'elle se positionne au plus près de la zone concernée le cas échéant (via un message POLICY). Ensuite, la flotte se connecte aux nœuds du réseau indiqués dans le message GRAFT (ces nœuds sont alors ici différents du nœud R2 attaqué et concerné par l'intervention de mitigation). Typiquement, deux nœuds (ingress, egress) sont indiqués par direction de trafic (pour « entrant » et « sortant »). Les mêmes nœuds d'entrée et de sortie peuvent être indiqués pour les deux directions (et ainsi le nœud d'entrée pour le trafic sortant est considéré comme le nœud de sortie pour le trafic entrant). En référence à l'exemple de la figure 14, les deux nœuds d'entrée et de sortie sont respectivement R1 et R4.

Une fois la connexion de la flotte de mitigation au réseau effective (autrement dit ici entre la flotte de mitigation et les nœuds (ingress, egress) R1 et R4), et en référence à l'exemple de la figure 14, la flotte d'objets mobiles est vue comme une extension capacitaire du nœud « R2 » qui a subi l'attaque et nécessité l'intervention.

Plusieurs stratégies peuvent être adoptées par R1 et R4 pour la répartition du trafic entre « R2 » et son extension (issue de la flotte d'objets mobiles), selon la nature de l'action de mitigation à exécuter par exemple. Ces stratégies peuvent être configurées au préalable sur R1 et R4 par l'opérateur du réseau sous forme de politiques ECA (« Event Condition Action »), communiquées par la flotte d'objets mobiles à R1 et R4 à l'aide de messages POLICY. Lors des opérations de mitigation, le trafic peut être envoyé directement à « R2 » ou être redirigé vers la flotte d'objets mobiles pour traitement. La redirection est locale à R1 et R4 (par exemple, selon des instructions « Match-Action », indiquant une répartition de charge de x% via R2 et de (100-x)% via la flotte).

La configuration suivante montre un exemple de politiques communiquées à R4 pour la sélection du trafic entrant à rediriger vers la flotte pour des besoins de mitigation : tout le trafic UDP à destination du préfixe 1.2.3.0/24 et ayant un numéro de port 443 est redirigé vers la flotte ; le reste du trafic est acheminé selon la route nominale. D'autres stratégies peuvent être adoptées par R1 et R4 selon la nature de l'attaque.

```
 « Event » : Activation-Interface-Flotte {
 {
 « Condition » : {
 « Dest_Prefix » =1.2.3.0/24,
 « Protocol » = udp,
 « Dest_Port_number » = 443
 },
 « Action » : Redirect-via-Flotte_any
 }
 }
```

En outre, la configuration suivante montre l'exemple de politiques communiquées à R1 pour la sélection du trafic sortant à rediriger vers la flotte pour procéder à des actions de mitigation : tout le trafic UDP émis depuis le préfixe 1.2.3.0/24 est redirigé vers la flotte ; le reste du trafic est acheminé selon la route nominale.

```
 « Event » : Activation-Interface-Flotte {
 {
 « Condition » : {
 « Src_Prefix » =1.2.3.0/24,
 « Protocol » = udp
 },
 « Action » : Redirect-via-Flotte_any
 }
 }
```

Un ou plusieurs objets mobiles peuvent être sollicités lorsque le trafic est redirigé vers une flotte d'objets mobiles. La sélection de l'objet mobile « ingress » (pour point d'entrée) peut être effectuée par les nœuds R1 et R4 selon plusieurs modes similaires à ceux de R2 illustrés par l'une quelconque des figures 12 et 13.

Dans le cadre d'une extension capacitaire, une fois le traitement effectué par la flotte, le trafic est réacheminé vers R2 qui le traite ensuite selon les règles d'acheminement nominales du réseau. D'autres actions peuvent être appliquées (typiquement : bloquer le trafic).

Ainsi, en référence à la figure 25, l'étape principale S-RR peut se résumer par exemple comme suit :
- un drone i, positionné à proximité d'un nœud Rj (grâce au message GRAFT reçu du serveur de mitigation), peut offrir à ce nœud Rj des ressources supplémentaires correspondant à une « extension de capacité » (EXT CAPA), en se connectant :
   * directement à ce nœud Rj, en mode d'extension locale, ou,
   * à un ou plusieurs nœuds voisins de ce nœud Rj, en mode parallèle ou bypass (deux nœuds R1 et R4 dans l'exemple de la figure 14, ou encore un seul nœud dans un cas particulier des figures 20-21) sans être connecté à ce nœud Rj ;
- une fois connecté (CONNECT) à ce nœud Rj, le drone i peut sécuriser les échanges en les chiffrant (SECUR), en accord avec la politique définie précédemment par les messages POLICY ;
- en effet, le serveur de mitigation MOB-SM en liaison avec (ou embarqué dans) la flotte envoie préalablement des messages POLICY :
   * aux objets mobiles de la flotte qui interviennent pour protéger le réseau NW (en plus des messages GRAFT), et
   * aux nœuds Rn,..., Rk restant actifs dans le réseau NW,
   afin de définir les règles de trafic adéquates pour la mitigation de l'attaque (ces règles pouvant être définies par des politiques ECA adaptées chacune à un objet mobile ou à un nœud ou à un ensemble d'objets mobiles et de nœuds).

En référence à la figure 25, pour la mise en œuvre de l'étape générale suivante S-ACT, de mise en place des actions de mitigation (ACTIONS_MITIGATION), plusieurs variantes sont possibles. En effet, pour l'application du service de mitigation par une flotte d'objets mobiles, les politiques de connexion des flottes d'objets mobiles au réseau décrites précédemment ne sont pas rappelées ici. Aussi, les exemples relatifs à l'extension capacitaire ne sont pas illustrés.

La figure 15 illustre l'exemple d'une action de mitigation qui consiste à remplacer un nœud du réseau qui subit une attaque (référencé R3 sur la figure 15). Un objet mobile (ex. un drone) d'une flotte de mitigation a reçu l'ordre de se connecter selon les modalités décrites précédemment. C'est ainsi qu'il établit des connexions avec tous les voisins de R3. Des messages POLICY sont ensuite envoyés à R1, R4, R5 et R6 pour qu'ils redirigent le trafic vers cet objet mobile et qu'ils désactivent leurs interfaces de communication vers R3. Ce faisant, une mise à jour logicielle, l'installation d'un correctif de sécurité, etc. peuvent être effectués tout en préservant la continuité de service (le trafic légitime est réacheminé vers l'objet mobile le temps que le nœud défaillant R3 soit rétabli dans son fonctionnement nominal). Dans certains cas, l'intervention de mitigation sur R3 peut être effectuée via l'objet mobile lui-même. Dans ce cas, l'objet mobile se connecte aussi à R3 ; cet ordre est reçu via un message POLICY (et non via le message GRAFT).

L'exemple de la figure 16 illustre un autre exemple d'action de mitigation et plus particulièrement l'activation d'une politique d'interception du trafic suspect au plus près de la source à l'origine de l'attaque DDoS. Ainsi, tout ou partie du trafic est redirigé vers la flotte d'objets mobiles qui embarque des fonctions d'inspection et de mitigation DDoS. Ces fonctions peuvent être distribuées entre plusieurs objets mobiles (ex. drones). Le trafic non-suspect est réinjecté dans le réseau nominal alors que le trafic DDoS est supprimé. Les métadonnées caractéristiques de l'attaque sont enregistrées par la flotte pour analyse ultérieure de la dynamique de l'attaque (amplitude, durée, type de trafic, etc.) et pour définir les mesures préventives à appliquer pour éviter que des attaques similaires n'aient lieu à nouveau sur le réseau. Le trafic légitime est injecté en se greffant au même nœud ou à un nœud du réseau différent de celui utilisé pour intercepter le trafic. La sélection du nœud pour réinjecter le trafic légitime « egress » (nœud de sortie) est une décision de la flotte qui tient compte de la charge du nœud ayant subi l'attaque DDoS (par exemple), de la compensation du délai de traitement au sein d'un serveur de mitigation DPS en liaison avec la flotte mobile ou encore du nombre de sauts IP du chemin nominal (comme illustré à titre d'exemple sur la figure 17, où le nombre de sauts du chemin nominal : quatre (R1-R2-R4-R6), est identique à celui utilisé via la flotte mobile (R1- deux sauts de drones -R6)), etc.

Une autre variante est illustrée sur la figure 18 où deux flottes d'objets mobiles (de drones) sont impliquées pour traiter et acheminer le trafic légitime. Cette variante peut être mise en place, par exemple, lorsque plusieurs nœuds d'un réseau ont subi une attaque (infection d'un système d'exploitation (ou OS pour Operating System) par exemple). Ce faisant, l'opérateur du réseau s'accorde le temps nécessaire pour l'investigation et l'application des correctifs sans rupture de service.

La figure 19 illustre une autre variante encore selon laquelle des politiques de sélection de trafic sont programmées dans un nœud du réseau. Le trafic légitime est acheminé selon les règles nominales, alors que le trafic suspect est redirigé vers une flotte d'objets mobiles (de drones) qui se charge de l'analyser et de bloquer le trafic DDoS. En plus d'assurer la continuité du service, cette variante a l'avantage d'optimiser l'utilisation des ressources du réseau car le trafic DDoS n'est pas acheminé par ce réseau mais bloqué « en amont ».

Les figures 20 et 21 montrent des exemples de politiques appliquées au trafic entrant ou sortant pour contourner un ou plusieurs nœuds du réseau suite à une attaque par déni de service générée par un nœud localisé dans le réseau à protéger. La flotte d'objets mobiles a pour mission d'intercepter le trafic légitime et de l'acheminer vers le réseau Internet (figure 20, trafic sortant) ou vers des machines connectées au réseau NW (figure 21, trafic entrant). L'interception du trafic entrant suppose que des routes spécifiques sont annoncées par la flotte d'objets mobiles et notées NW# pour pouvoir recevoir le trafic destiné au réseau cible NW ou ce dernier réseau NW n'annonce pas ces routes vers ses voisins. Ces routes sont donc plus spécifiques que celles annoncées par le réseau NW pour garantir leur sélection.

En référence à la figure 25, l'étape S-ACT peut alors se résumer par exemple comme suit. Les objets mobiles intervenant assurent que :
- le trafic suspect DDoS est bloqué et filtré par exemple, et/ou que les nœuds concernés (suspectés et/ou à protéger) Rj du réseau NW sont secourus par exemple (en mode bypass ou autre),
- le trafic nominal puisse continuer à être acheminé en sécurité (référence "Root trafic nom" de la figure 25 à l'étape S-ACT.)

En référence à la figure 25, l'étape générale suivante S-DESAC vise par exemple une déconnexion (DESACTIVATION) pour opérer une terminaison des opérations de mitigation via une flotte de mitigation. Plusieurs variantes sont possibles pour mettre fin aux opérations de mitigation entreprises par une flotte et pour déconnecter cette flotte du réseau à protéger. Les messages CEASE et POLICY introduits précédemment sont utilisés à cet effet.

Dans le mode de réalisation décrit ici, les agents de sécurité ACT-AD embarqués dans le réseau décident après analyse du trafic que l'attaque n'est plus active. Un de ces agents contacte par exemple le serveur de mitigation MOB-SM en liaison avec ou embarqué dans la flotte pour lui demander de mettre fin aux opérations de mitigation et de se déconnecter (via un message CEASE). Le serveur de mitigation MOB-SM peut accepter la demande immédiatement ou bien demander de maintenir l'action de mitigation active pendant un délai supplémentaire car la flotte de mitigation détecte encore du trafic DDoS dans le trafic analysé. Un message nommé par exemple WAIT (reason, timer, ...) est alors envoyé par la flotte audit agent, avec pour champs :
- un champ « reason » renseignant la raison pour laquelle la demande de déconnexion doit être différée, et
- un champ « timer » indiquant une échéance au-delà de laquelle la même demande peut être renvoyée, les opérations de mitigation étant maintenues entretemps.

Après analyse du trafic redirigé vers la flotte mobile, cette dernière peut décider de coordonner la déconnexion du service avec le réseau protégé. Pour ce faire, le serveur de mitigation MOB-SM communique par exemple aux nœuds ingress/egress du réseau les nouvelles politiques pour le traitement du trafic suspect dans un message POLICY. Un exemple de politique est décrit ci-après où tout le trafic UDP provenant de 1.2.3.0/24 peut dorénavant être acheminé selon le chemin nominal, comme suit :

```
 « Event » : Deactivation-Interface-Flotte{
 {
 « Condition » : {
 « Src_Prefix » =1.2.3.0/24,
 « Protocol » = udp
 },
 « Action » : local_default_forwarding
 }
 }
```

Après activation des nouvelles politiques, les nœuds du réseau protégé ainsi que la ceux de la flotte se déconnectent. Les objets mobiles de la flotte se déconnectent après réception d'un message CEASE.

En référence à la figure 25, cette dernière étape principale S-DESAC peut donc se résumer par exemple comme suit :
- l'un des agents de sécurité du réseau ACT-AD peut déterminer que l'attaque n'est plus active et contacter le serveur de mitigation MOB-SM en liaison avec (ou embarqué dans) la flotte pour mettre fin à la mitigation ;
- le serveur de mitigation MOB-SM en liaison avec (ou embarqué dans) la flotte vérifie si l'attaque est toujours active (par exemple en sondant les objets mobiles impliqués dans l'intervention de mitigation pour déterminer s'ils détectent encore du trafic suspect, en consultant l'état d'avancement de l'exécution d'une fonction de « scrubbing »), et si tel est le cas, envoie un message WAIT à l'agent de sécurité ACT-AD, et sinon envoie un message CEASE aux objets mobiles impliqués dans l'intervention (ou, préalablement à cette étape, envoie des messages POLICY descriptifs des politiques de gestion de trafic visant à faire cesser progressivement l'acheminement de trafic par les objets mobiles).

Les figures 22 et suivantes résument les messages échangés entre les différentes entités dans l'ensemble du procédé ci-avant.

Dans l'exemple particulier de la figure 22, on suppose qu'un agent de sécurité ACT-AD est à l'initiative de la demande de mitigation. Cet agent envoie un message SOS au serveur de mitigation SM (localisé dans le réseau NW ou à l'extérieur, comme on l'a vu précédemment). Ce serveur de mitigation SM décide de solliciter un service DPS mobile en envoyant un message de requête de mitigation vers l'un des serveurs de mitigation MOB-SM du service DPS mobile, dans l'exemple illustré. L'un de ces serveurs prend en charge la demande et décide de connecter une flotte mobile au réseau NW en utilisant plusieurs objets mobiles, en l'occurrence ici plusieurs drones (Drone#1, ...Drone#i) ; des instructions de connexion sont communiquées à ces drones à l'aide de messages GRAFT. De même, ce serveur de mitigation MOB-SM décide des actions de repositionnement de certains drones voire de modifications de configuration. Des messages POLICY sont envoyés vers tout ou partie des drones de la flotte de mitigation (Drone#j,...Drone#k). A noter que certains drones du premier groupe (Drone#1, ...Drone#i) peuvent aussi recevoir des messages POLICY. Aucune contrainte n'est imposée quant à l'ordre d'envoi des messages POLICY et GRAFT. Une fois la connexion établie avec le réseau NW, le serveur de mitigation MOB-SM peut communiquer des instructions aux nœuds R1,.., Rs de ce réseau NW. Selon la progression de l'attaque et les actions de mitigation, le serveur de mitigation peut décider de nouvelles actions de mitigation à exécuter par les objets de la flotte ou les nœuds du réseau protégé. Le serveur de mitigation peut mettre fin à la procédure en ordonnant aux drones (Drone#1, ... Drone#i) de se déconnecter du réseau à l'aide de messages CEASE.

A la différence de l'exemple de la figure 22, l'exemple de la figure 23 suppose que le serveur de mitigation MOB-SM qui reçoit le message SOS est celui qui est apte à décider quels sont les drones qui doivent se connecter au réseau, ceux qui doivent se repositionner, etc. La suite des opérations est identique à celles de la figure 22.

Les ordres transmis à une flotte d'objets mobiles par un serveur de mitigation peuvent être envoyés individuellement aux objets mobiles d'une flotte ou être relayés par un contrôleur de flotte CTRL qui est également l'un des objets mobiles de la flotte. Cette réalisation est illustrée par la figure 24. Les instructions envoyées au contrôleur CTRL peuvent être agrégées comme le message GRAFT (typiquement des instructions ciblant plusieurs objets mobiles étant communiquées dans un même message) ou non (comme les messages POLICY). Dans ce cas, le contrôleur se charge d'extraire (et de compléter) les instructions relatives à chaque objet mobile. Les échanges en amont du serveur de mitigation MOB-SM peuvent être similaires à ceux échangés en amont du serveur MOB-SM de la figure 22 ou à ceux échangés en amont du serveur MOB-SM de la figure 23.

## Revendications

1. Procédé de gestion d'assistance à un réseau de communication (NW) susceptible d'acheminer un trafic caractéristique d'une attaque informatique, le procédé comportant:
- sur détection d'une attaque informatique, identifier au moins un premier nœud du réseau (R2), nécessitant une intervention de mitigation, et identifier une politique de routage de trafic dans le réseau,
- piloter un déplacement d'au moins un objet mobile (F), et comportant au moins une interface de communication, pour connecter l'objet mobile à au moins un deuxième nœud du réseau (R2 ; R1,R4) déterminé relativement au premier nœud en fonction de ladite politique de routage de trafic,
- contrôler au moins une partie du trafic acheminé par le réseau pour rediriger ladite partie de trafic vers l'objet mobile via au moins ledit deuxième nœud dudit réseau.

2. Procédé selon la revendication 1, dans lequel le deuxième nœud correspond au premier nœud (R2).

3. Procédé selon l'une des revendications précédentes, dans lequel on prévoit une pluralité d'objets mobiles (F ; F1, F2, F3), comportant chacun au moins une interface de communication pour communiquer au moins entre objets mobiles, et un premier objet mobile, parmi ladite pluralité d'objets mobiles, est piloté pour se connecter au moins audit deuxième nœud du réseau.

4. Procédé selon la revendication 3, dans lequel l'identification du premier nœud du réseau et de la politique de routage de trafic dans le réseau est réalisée par un serveur de mitigation (SM-MOB) embarqué dans l'un des objets mobiles.

5. Procédé selon l'une des revendications 3 et 4, dans lequel l'attaque informatique est détectée par un deuxième objet mobile (ACT-AD), relié au réseau.

6. Procédé selon l'une des revendications précédentes, dans lequel l'attaque informatique est détectée par l'objet mobile, piloté pour se connecter au moins audit deuxième nœud.

7. Procédé selon l'une des revendications 1 à 4, dans lequel l'attaque informatique est détectée par un troisième nœud du réseau.

8. Procédé selon l'une des revendications précédentes, dans lequel l'objet mobile est équipé d'un circuit de traitement comportant des ressources informatiques fournissant des capacités informatiques pour traiter au moins ladite partie de trafic redirigée vers l'objet mobile.

9. Procédé selon l'une des revendications précédentes, dans lequel l'objet mobile est configuré pour analyser et filtrer au moins ladite partie de trafic redirigée vers l'objet mobile.

10. Procédé selon l'une des revendications précédentes, dans lequel l'intervention nécessitée est une mitigation de trafic (MITIGATE) en réponse à une attaque par déni de service.

11. Procédé selon l'une des revendications précédentes, dans lequel l'objet mobile est configuré pour établir une communication par liaison radiofréquence pour se connecter à au moins ledit deuxième nœud, le déplacement de l'objet mobile étant pilotable à distance pour s'approcher d'une position géographique du deuxième nœud.

12. Procédé selon l'une des revendications précédentes, comprenant :
- une émission d'un message de greffe (GRAFT) à destination de l'objet mobile, pour commander un déplacement de l'objet mobile et établir une connexion de l'objet mobile au deuxième nœud, désigné dans le message de greffe,
- une émission d'un message de politique de routage (POLICY) à destination de l'objet mobile, pour commander au moins une règle de routage de trafic par l'objet mobile,
- une émission d'un message de politique de routage (POLICY) à destination au moins du deuxième nœud, pour commander au moins une règle de routage de trafic par le deuxième nœud.

13. Procédé selon la revendication 12, dans lequel l'émission desdits messages est effectuée par au moins un serveur de mitigation (SM-MOB) en lien avec l'objet mobile.

14. Programme informatique comportant des instructions pour la mise en œuvre du procédé selon l'une des revendications 1 à 13, lorsque lesdites instructions sont exécutées par un processeur d'un circuit de traitement.

15. Système de gestion d'assistance à un réseau de communication susceptible d'acheminer un trafic caractéristique d'une attaque informatique, comportant au moins:
- un objet mobile (F), et comportant au moins une interface de communication, pour se connecter au moins à un nœud du réseau (R2),
- un serveur de mitigation (SM-MOB ; SM) configuré pour, en réponse à une détection d'attaque informatique :
* identifier au moins un premier nœud du réseau, nécessitant une intervention de mitigation,
* identifier une politique de routage de trafic dans le réseau,
* piloter un déplacement de l'objet mobile pour connecter l'objet mobile à au moins un deuxième nœud du réseau (R2 ; R1, R4), déterminé relativement au premier nœud en fonction de ladite politique de routage de trafic,
* contrôler au moins une partie du trafic acheminé par le réseau pour rediriger ladite partie de trafic vers l'objet mobile via au moins ledit deuxième nœud dudit réseau.

16. Serveur de mitigation pour une assistance à un réseau de communication susceptible d'acheminer un trafic caractéristique d'une attaque informatique,
le serveur de mitigation étant configuré pour, en réponse à une détection d'attaque informatique :
* identifier au moins un premier nœud du réseau (R2), nécessitant une intervention de mitigation,
* identifier une politique de routage de trafic dans le réseau,
* piloter un déplacement d'au moins un objet mobile (F) comportant au moins une interface de communication, pour connecter ledit objet mobile à au moins un deuxième nœud du réseau (R2 ; R1, R4), déterminé relativement au premier nœud en fonction de ladite politique de routage de trafic,
* contrôler au moins une partie du trafic acheminé par le réseau pour rediriger ladite partie de trafic vers l'objet mobile via au moins ledit deuxième nœud dudit réseau.

## Patentansprüche

1. Verfahren zur Verwaltung von Unterstützung für ein Kommunikationsnetzwerk (NW), das geeignet ist, einen für einen Rechnerangriff charakteristischen Verkehr weiterzuleiten, das Verfahren umfassend:
- bei Detektion eines Rechnerangriffs, Identifizieren mindestens eines ersten Knotens des Netzwerks (R2), der einen Mitigation-Eingriff benötigt, und Identifizieren einer Verkehrsroutingstrategie in dem Netzwerk,
- Steuern einer Verlagerung mindestens eines Objekts (F), das beweglich ist und mindestens eine Kommunikationsschnittstelle umfasst, um das bewegliche Objekt mit mindestens einem zweiten Knoten des Netzwerks (R2; R1, R4) zu verbinden, der relativ zu dem ersten Knoten in Abhängigkeit von der Verkehrsroutingstrategie bestimmt wird,
- Kontrollieren mindestens eines Teils des von dem Netzwerk weitergeleiteten Verkehrs, um den Verkehrsteil zu dem beweglichen Objekt über mindestens den zweiten Knoten des Netzwerks umzuleiten.

2. Verfahren nach Anspruch 1, wobei der zweite Knoten dem ersten Knoten (R2) entspricht.

3. Verfahren nach einem der vorhergehenden Ansprüche, wobei man eine Mehrzahl von beweglichen Objekten (F; F1, F2, F3) vorsieht, die jeweils mindestens eine Kommunikationsschnittstelle umfassen, um mindestens zwischen beweglichen Objekten zu kommunizieren, und ein erstes bewegliches Objekt unter der Mehrzahl von beweglichen Objekten gesteuert wird, um sich mindestens mit dem zweiten Knoten des Netzwerks zu verbinden.

4. Verfahren nach Anspruch 3, wobei das Identifizieren des ersten Knotens des Netzwerks und der Verkehrsroutingstrategie in dem Netzwerk von einem Mitigation-Server (SM-MOB) ausgeführt wird, der in eines der beweglichen Objekte integriert ist.

5. Verfahren nach einem der Ansprüche 3 und 4, wobei der Rechnerangriff von einem zweiten beweglichen Objekt (ACT-AD) detektiert wird, das an das Netzwerk angebunden ist.

6. Verfahren nach einem der vorhergehenden Ansprüche, wobei der Rechnerangriff von dem beweglichen Objekt detektiert wird, das gesteuert wird, um sich mindestens mit dem zweiten Knoten zu verbinden.

7. Verfahren nach einem der Ansprüche 1 bis 4, wobei der Rechnerangriff von einem dritten Knoten des Netzwerks detektiert wird.

8. Verfahren nach einem der vorhergehenden Ansprüche, wobei das bewegliche Objekt mit einer Verarbeitungsschaltung ausgestattet ist, die Rechnerressourcen umfasst, die Rechnerkapazitäten bereitstellen, um mindestens den zu dem beweglichen Objekt umgeleiteten Verkehrsteil zu verarbeiten.

9. Verfahren nach einem der vorhergehenden Ansprüche, wobei das bewegliche Objekt dazu ausgestaltet ist, mindestens den zu dem beweglichen Objekt umgeleiteten Verkehrsteil zu analysieren und zu filtern.

10. Verfahren nach einem der vorhergehenden Ansprüche, wobei der benötigte Eingriff eine Mitigation von Verkehr (MITIGATE) als Reaktion auf einen Denial-of-Service-Angriff ist.

11. Verfahren nach einem der vorhergehenden Ansprüche, wobei das bewegliche Objekt dazu ausgestaltet ist, eine Kommunikation über eine Hochfrequenzverbindung aufzubauen, um sich mindestens mit dem zweiten Knoten zu verbinden, wobei die Verlagerung des beweglichen Objekts aus der Ferne steuerbar ist, um sich einer geografischen Position des zweiten Knotens zu nähern.

12. Verfahren nach einem der vorhergehenden Ansprüche, umfassend:
- ein Senden einer Aufpfropf-Meldung (GRAFT) an das bewegliche Objekt, um eine Verlagerung des beweglichen Objekts anzuordnen und eine Verbindung des beweglichen Objekts mit dem zweiten Knoten aufzubauen, der in der Aufpfropf-Meldung benannt wird,
- ein Senden einer Routingstrategie-Meldung (POLICY) an das bewegliche Objekt, um mindestens eine Verkehrsroutingregel durch das bewegliche Objekt anzuordnen,
- ein Senden einer Routingstrategie-Meldung (POLICY) mindestens an den zweiten Knoten, um mindestens eine Verkehrsroutingregel durch den zweiten Knoten anzuordnen.

13. Verfahren nach Anspruch 12, wobei das Senden der Meldungen durch mindestens einen Mitigation-Server (SM-MOB) in Verbindung mit dem beweglichen Objekt erfolgt.

14. Computerprogramm, das Anweisungen umfasst, die bei der Ausführung der Anweisungen durch einen Prozessor einer Verarbeitungsschaltung das Verfahren nach einem der Ansprüche 1 bis 13 ausführen.

15. System zur Verwaltung von Unterstützung für ein Kommunikationsnetzwerk, das geeignet ist, einen für einen Rechnerangriff charakteristischen Verkehr weiterzuleiten, umfassend mindestens:
- ein Objekt (F), das beweglich ist und mindestens eine Kommunikationsschnittstelle umfasst, um sich mindestens mit einem Knoten des Netzwerks (R2) zu verbinden,
- einen Mitigation-Server (SM-MOB; SM), der dazu ausgestaltet ist, als Reaktion auf eine Detektion eines Rechnerangriffs:
* mindestens einen ersten Knoten des Netzwerks zu identifizieren, der einen Mitigation-Eingriff benötigt,
* eine Verkehrsroutingstrategie in dem Netzwerk zu identifizieren,
- eine Verlagerung des beweglichen Objekts zu steuern, um das bewegliche Objekt mit mindestens einem zweiten Knoten des Netzwerks (R2; R1, R4) zu verbinden, der relativ zu dem ersten Knoten in Abhängigkeit von der Verkehrsroutingstrategie bestimmt wird,
- mindestens eines Teils des von dem Netzwerk weitergeleiteten Verkehrs zu kontrollieren, um den Verkehrsteil zu dem beweglichen Objekt über mindestens den zweiten Knoten des Netzwerks umzuleiten.

16. Mitigation-Server für eine Unterstützung für ein Kommunikationsnetzwerk, das geeignet ist, einen für einen Rechnerangriff charakteristischen Verkehr weiterzuleiten,
wobei der Mitigation-Server dazu ausgestaltet ist, als Reaktion auf eine Detektion eines Rechnerangriffs:
* mindestens einen ersten Knoten des Netzwerks (R2) zu identifizieren, der einen Mitigation-Eingriff benötigt,
* eine Verkehrsroutingstrategie in dem Netzwerk zu identifizieren,
- eine Verlagerung mindestens eines beweglichen Objekts (F) zu steuern, das mindestens eine Kommunikationsschnittstelle umfasst, um das bewegliche Objekt mit mindestens einem zweiten Knoten des Netzwerks (R2; R1, R4) zu verbinden, der relativ zu dem ersten Knoten in Abhängigkeit von der Verkehrsroutingstrategie bestimmt wird,
- mindestens eines Teils des von dem Netzwerk weitergeleiteten Verkehrs zu kontrollieren, um den Verkehrsteil zu dem beweglichen Objekt über mindestens den zweiten Knoten des Netzwerks umzuleiten.

## Claims

1. Method for managing assistance for a communication network (NW) capable of routing traffic characteristic of a computer attack, the method comprising:
- upon detecting a computer attack, identifying at least one first node (R2) of the network, requiring a mitigation intervention, and identifying a traffic routing policy in the network;
- controlling a movement of at least one mobile object (F) comprising at least one communication interface, so as to connect the mobile object to at least one second node (R2; R1, R4) of the network determined relative to the first node according to said traffic routing policy; and
- controlling at least one portion of the traffic routed by the network, so as to redirect said portion of the traffic to the mobile object via at least said second node of said network.

2. Method according to Claim 1, wherein the second node corresponds to the first node (R2).

3. Method according to any of the preceding claims, wherein a plurality of mobile objects (F; F1, F2, F3) is provided, each comprising at least one communication interface for communicating at least between mobile objects, and a first mobile object, from among said plurality of mobile objects, is controlled so as to connect to at least said second node of the network.

4. Method according to Claim 3, wherein identifying the first node of the network and the traffic routing policy in the network is carried out by a mitigation server (SM-MOB) embedded in one of the mobile objects.

5. Method according to any of Claims 3 and 4, wherein the computer attack is detected by a second mobile object (ACT-AD) connected to the network.

6. Method according to any of the preceding claims, wherein the computer attack is detected by the mobile object, which is controlled so as to connect at least to said second node.

7. Method according to any of Claims 1 to 4, wherein the computer attack is detected by a third node of the network.

8. Method according to any of the preceding claims, wherein the mobile object is equipped with a processing circuit comprising computing resources providing computing capabilities for processing at least said portion of the traffic redirected to the mobile object.

9. Method according to any of the preceding claims, wherein the mobile object is configured to analyse and filter at least said portion of the traffic redirected to the mobile object.

10. Method according to any of the preceding claims, wherein the required intervention is traffic mitigation (MITIGATE) in response to a denial of service attack.

11. Method according to any of the preceding claims, wherein the mobile object is configured to establish communication via a radiofrequency link in order to connect to at least said second node, with the movement of the mobile object being remotely controllable so as to approach a geographical position of the second node.

12. Method according to any of the preceding claims, comprising:
- transmitting a graft message (GRAFT) to the mobile object, in order to control a movement of the mobile object and to connect the mobile object to the second node, designated in the graft message;
- transmitting a routing policy message (ROUTING) to the mobile object, in order to control at least one rule for routing traffic via the mobile object; and
- transmitting a routing policy message (POLICY) to at least the second node, in order to control at least one rule for routing traffic via the second node.

13. Method according to Claim 12, wherein said messages are transmitted by at least one mitigation server (SM-MOB) linked to the mobile object.

14. Computer program, comprising instructions for implementing the method according to any of Claims 1 to 13, when said instructions are executed by a processor of a processing circuit.

15. System for managing assistance for a communication network capable of routing traffic characteristic of a computer attack, the system comprising at least:
- a mobile object (F) comprising at least one communication interface for connecting to at least one node (R2) of the network;
- a mitigation server (SM-MOB; SM) configured, in response to the detection of a computer attack, to:
* identify at least one first node of the network, requiring a mitigation intervention;
* identify a traffic routing policy in the network;
* control a movement of the mobile object so as to connect the mobile object to at least one second node (R2; R1, R4) of the network determined relative to the first node according to said traffic routing policy;
* control at least one portion of the traffic routed by the network, so as to redirect said portion of the traffic to the mobile object via at least said second node of said network.

16. Mitigation server for assisting a communication network capable of routing traffic characteristic of a computer attack,
the mitigation server being configured, in response to the detection of a computer attack, to:
* identify at least one first node (R2) of the network, requiring a mitigation intervention;
* identify a traffic routing policy in the network;
* control a movement of at least one mobile object (F) comprising at least one communication interface, so as to connect said mobile object to at least one second node (R2; R1, R4) of the network determined relative to the first node according to said traffic routing policy;
* control at least one portion of the traffic routed by the network, so as to redirect said portion of the traffic to the mobile object via at least said second node of said network.
